# EUROPEAN PATENT APPLICATION

(11) **EP 2 744 200 A2**
(43) Date of publication of application: **18.06.2014**
(21) Application number: 12822619.8
(22) Date of filing: 09.08.2012
(51) Int. Cl.: H04N 7/26

(54) **MULTIVIEW VIDEO DATA ENCODING METHOD AND DEVICE, AND DECODING METHOD AND DEVICE**

(30) Priority: 09.08.2011 US 201161521526 P
(71) Applicant: Samsung Electronics Co., Ltd., Suwon-si, Gyeonggi-do 443-742 (KR)
(72) Inventor: CHOI, Byeong-doo, Siheung-si Gyeonggi-do 429-010 (KR); JEONG, Seung-soo, Seoul 138-200 (KR); PARK, Jeong-hoon, Seoul 151-050 (KR)
(74) Representative: Jones, Ithel Rhys
(86) International application number: PCT/KR2012/006356
(87) International publication number: WO 2013/022296

(57) **Abstract**

A method and apparatus for encoding multi-view video data, and a method and apparatus for decoding multi-view video data. The method of encoding multi-view video data includes obtaining a multi-view color video frame and a depth map frame corresponding to the multi-view color video frame, prediction-encoding the multi-view color video frame, and prediction-encoding the corresponding depth map frame, based on a result of prediction-encoding the multi-view color video frame.

## Description

### Technical Field

The present invention relates to encoding and decoding multi-view video data including a depth image.

### Background Art

Recently, as digital image processing and computer graphics technology have been developed, research has been actively conducted on three-dimensional (3D) video technology and multi-view video technology enabling the real world to be reproduced and users to realistically experience the reproduced real world. 3D televisions (TVs) using multi-view video are capable of providing users with realistic feelings by displaying contents obtained by reproducing a real world, and thus have drawn much attention as next-generation broadcasting technology. A 3D video encoding system has a function of supporting multi-view images, via which users may freely change viewpoints or so that the 3D video encoding system can be applied to various types of 3D reproducing apparatuses. However, since an amount of data of multi-view video is high, there is a need to develop an encoding method of efficiently reducing the amount of the data of the multi-view video.

### Detailed Description of the Invention

### Technical Problem

The present invention provides a method and apparatus for efficiently encoding a depth map image for providing 3D video to multi-view video data, and a method and apparatus for effectively decoding the depth map.

### Technical Solution

According to the present invention, a depth map image is encoded and decoded, based on the relationship between a color image and the depth map image.

### Advantageous Effects

According to the present invention, multi-view video data can be efficiently compressed, based on the relationship between a multi-view color video frame and a depth map frame.

### Brief Description of the Drawings

FIG. 1 is a block diagram of a multi-view video system according to an embodiment of the present invention.
FIG. 2 illustrates multi-view video frames obtained via multi-view cameras of FIG. 1 and depth map frames obtained via a depth camera of FIG. 1.
FIG. 3 is a block diagram of a multi-view video data encoding apparatus according to an embodiment of the present invention.
FIG. 4 illustrates a case where a corresponding depth map frame is split, based on split information about a multi-view color video frame, according to an embodiment of the present invention.
FIG. 5 illustrates a case where a block of a corresponding depth map frame is encoded, based on a block of a multi-view color video frame encoded according to a skip mode, according to an embodiment of the present invention.
FIG. 6 illustrates a case where a motion vector of a block of a corresponding depth map frame is determined based on a motion vector of a block of a multi-view color video frame, according to an embodiment of the present invention.
FIG. 7 illustrates a case where a block of a corresponding depth map frame is intra-predicted based on a block of a multi-view color video frame, according to an embodiment of the present invention.
FIG. 8 is a flowchart illustrating a method of encoding multi-view video data, according to an embodiment of the present invention.
FIG. 9 is a block diagram of a multi-view video data decoding apparatus according to an embodiment of the present invention.
FIG. 10 is a flowchart illustrating a method of decoding multi-view video data, according to an embodiment of the present invention.
FIG. 11 illustrates multi-view color video frames encoded based on a method of encoding multi-view video and decoded based on a method of decoding multi-view video, according to an embodiment of the present invention.
FIG. 12 is a block diagram of a video encoding apparatus capable of performing video prediction based on coding units having a tree structure, according to an embodiment of the present invention.
FIG. 13 is a block diagram of a video decoding apparatus capable of performing video prediction based on coding units having a tree structure, according to an embodiment of the present invention.
FIG. 14 illustrates a concept of coding units according to an embodiment of the present invention.
FIG. 15 is a block diagram of an image encoder based on coding units, according to an embodiment of the present invention.
FIG. 16 is a block diagram of an image decoder based on coding units, according to an embodiment of the present invention.
FIG. 17 is a diagram illustrating coding units corresponding to depths, and partitions, according to an embodiment of the present invention.
FIG. 18 is a diagram illustrating a relationship between a coding unit and transformation units, according to an embodiment of the present invention.
FIG. 19 is a diagram illustrating encoding information corresponding to depths, according to an embodiment of the present invention.
FIG. 20 is a diagram illustrating coding units corresponding to depths, according to an embodiment of the present invention.
FIGS. 21, 22, and 23 is a diagram illustrating a relationship between coding units, prediction units, and transformation units, according to an embodiment of the present invention.
FIG. 24 is a diagram illustrating a relationship between a coding unit, a prediction unit, and a transformation unit, according to encoding mode information of Table 1.
FIG. 25A illustrates a physical structure of a disc that stores a program, according to an embodiment of the present invention.
FIG. 25B illustrates a disc drive that records and reads a program by using a disc.
FIG. 26 illustrates an entire structure of a content supply system that provides a content distribution service.
FIGS. 27 and 28 illustrate external and internal structures of a mobile phone to which a video encoding method and a video decoding method are applied, according to an embodiment of the present invention.
FIG. 29 illustrates a digital broadcasting system employing a communication system, according to an embodiment of the present invention.
FIG. 30 illustrates a network structure of a cloud computing system using a video encoding apparatus and a video decoding apparatus, according to an embodiment of the present invention.

### Best Mode

According to an aspect of the present invention, there is provided a method of encoding multi-view video data, the method including obtaining a multi-view color video frame and a depth map frame corresponding to the multi-view color video frame; prediction-encoding the multi-view color video frame; and prediction-encoding the corresponding depth map frame, based on a result of prediction-encoding the multi-view color video frame.

According to another aspect of the present invention, there is provided a multi-view video data encoding apparatus including an image obtaining unit for obtaining a multi-view color video frame and a depth map frame corresponding to the multi-view color video frame; a color video frame encoding unit for prediction-encoding the multi-view color video frame; and a depth map frame encoding unit for prediction-encoding the corresponding depth map frame, based on a result of prediction-encoding the multi-view color video frame.

According to another aspect of the present invention, there is provided a method of decoding multi-view video data, the method including receiving a bitstream containing a result of encoding a multi-view color video frame and a depth map frame corresponding to the multi-view color video frame; decoding the multi-view color video frame; and prediction-decoding the corresponding depth map frame, based on a result of decoding the multi-view color video frame.

According to another aspect of the present invention, there is provided an apparatus for decoding multi-view video data, the apparatus including a receiving unit for receiving a bitstream including an encoded multi-view color video frame and an encoded depth map frame corresponding to the multi-view color video frame; a color video frame decoding unit for decoding the encoded multi-view color video frame obtained from the bitstream; and a depth map frame decoding unit for prediction-decoding the corresponding depth map frame, based on a result of decoding the multi-view color video frame.

### Mode of the Invention

Hereinafter, exemplary embodiments of the present invention will be described in detail with reference to the appended claims.

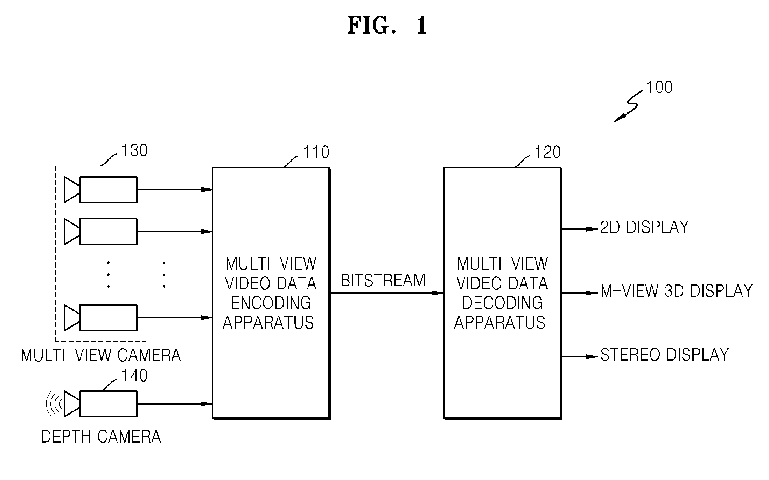

FIG. 1 is a block diagram of a multi-view video system 100 according to an embodiment of the present invention.

The multi-view video system 100 includes a multi-view video data encoding apparatus 110 and a multi-view video data decoding apparatus 120. The multi-view video data encoding apparatus 110 generates a bitstream by encoding a multi-view video frame obtained via at least two multi-view cameras 130 and a depth map frame corresponding to the multi-view video frame, obtained via a depth camera 140. The multi-view video data decoding apparatus 120 decodes the bitstream to obtain the decoded multi-view video frame, and provides the decoded multi-view video frame in any of various formats, according to demand of a viewer.

The at least two multi-view cameras 130 are manufactured by combining a plurality of different view cameras and may provide multi-view video in units of frames. The depth camera 140 provides a depth map frame that represents depth information of a scene with an 8-bit image having 256 gradation levels. The depth camera 140 may measure a distance between the depth camera 140 and an object or a background by using infrared rays, and may provide the depth map frame that is proportional or inversely proportional to the distance.

If the multi-view video data encoding apparatus 110 encodes multi-view video data and a depth map frame corresponding thereto and transmits a result of the encoding through a bitstream, then the multi-view video data decoding apparatus 120 may not only provide a stereoscopic effect using the existing stereo image or three-dimensional (3D) video but also synthesize 3D video from viewpoints that a viewer desires, based on the multi-view video frame and the depth map frame included in the bitstream.

An amount of multi-view video data that is to be encoded increases to be proportional to the number of viewpoints, and a depth map image should also be encoded so as to add a stereoscopic effect to multi-view video data. Thus, to realize a multi-view video system as illustrated in FIG. 1, an enormous amount of multi-view video data should be effectively compressed.

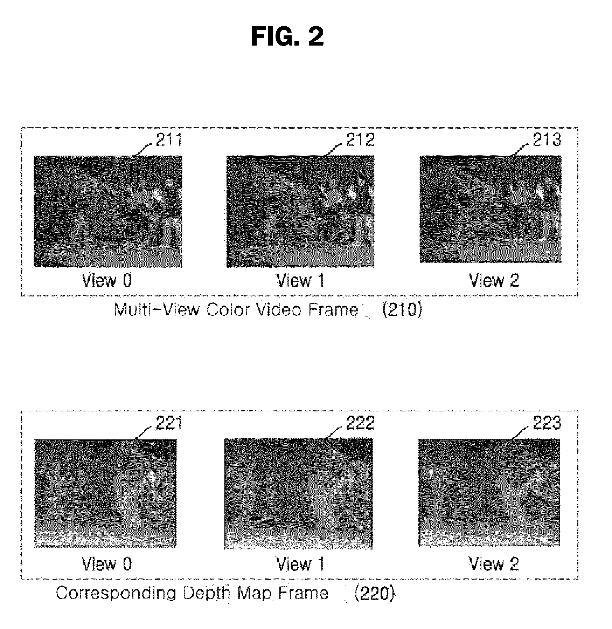

FIG. 2 illustrates multi-view video frames obtained via the at least two multi-view cameras 130 of FIG. 1 and depth map frames obtained via the depth camera 140 of FIG. 1.

FIG. 2 illustrates a depth map frame 221 captured from a first viewpoint view 0 corresponding to a color video frame 211 captured from the first viewpoint view 0, a depth map frame 222 captured from a second viewpoint view 1 corresponding to a color video frame 212 captured from the second viewpoint view 1, and a depth map frame 223 captured from a third viewpoint view 2 corresponding to a color video frame 213 captured from the third viewpoint view 2. Although FIG. 2 illustrates a multi-view color video frame 210 and a depth map frame 220 corresponding thereto, captured from the three viewpoints view 0, view 1, and view 2, the total number of viewpoints is not limited thereto. In FIG. 2, the multi-view color video frame 210 may be a luminance component video frame or a chrominance component video frame.

Referring to FIG. 2, a specific relationship is present between a color video frame and a depth map frame thereof captured from the same viewpoint, since they are obtained by representing an image captured at the same point of time and from the same viewpoint by using a color and depth. That is, when the multi-view color video frame 210 and the corresponding depth map frame 220 are compared, a specific relationship is present therebetween, e.g., the outline of an object may be identified. Thus, the multi-view video data encoding apparatus 110 and the multi-view video data decoding apparatus 120 according to the current embodiment may prediction-encode the corresponding depth map frame 220 based on a result of encoding the multi-view color video frame 210, in consideration of the relationship between the multi-view color video frame 210 and the corresponding depth map frame 220, thereby increasing the compression efficiency of multi-view video data.

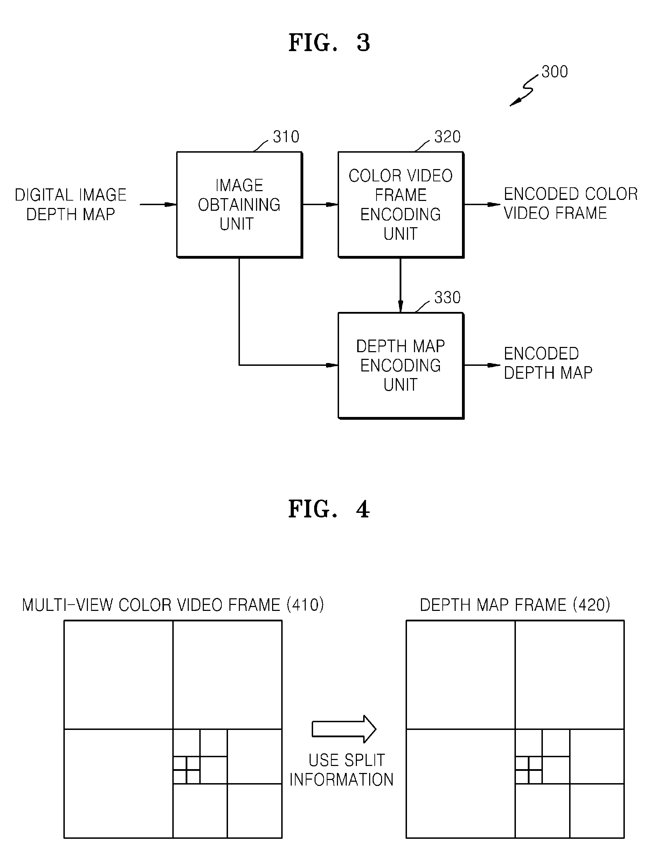

FIG. 3 is a block diagram of a multi-view video data encoding apparatus 300 according to an embodiment of the present invention.

Referring to FIG. 3, the multi-view video data encoding apparatus 300 includes an image obtaining unit 310, a color video frame encoding unit 320, and a depth map encoding unit 330.

The image obtaining unit 310 obtains a multi-view color video frame by using multi-view video obtaining units such as the at least two multi-view cameras 130 of FIG. 1, and obtains a depth map frame corresponding to the multi-view color video frame by using a depth map frame obtaining unit such as the depth camera 140.

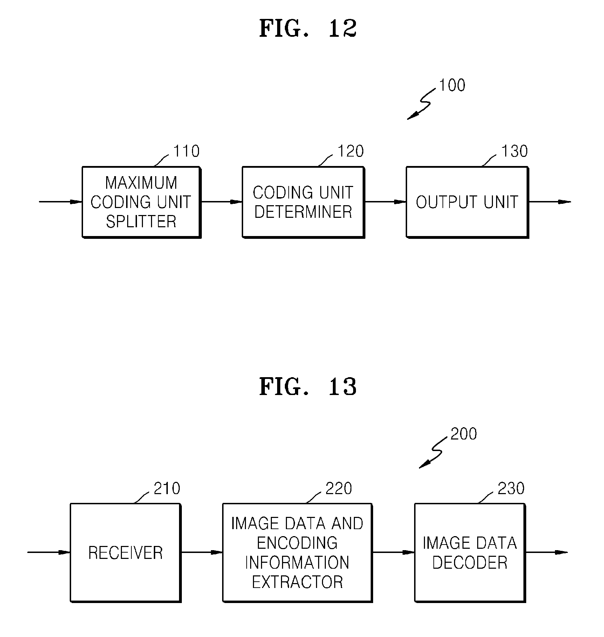

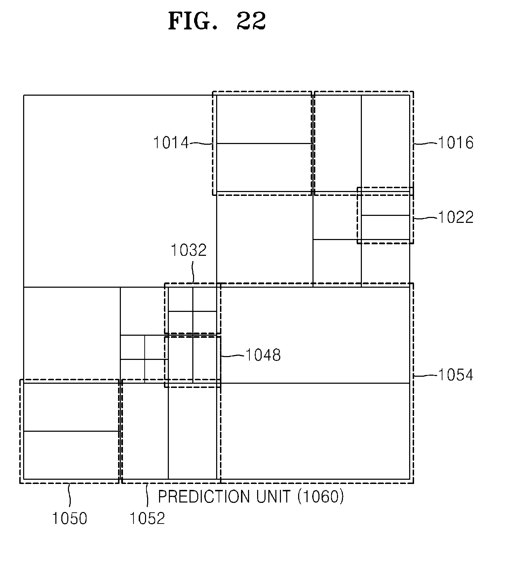

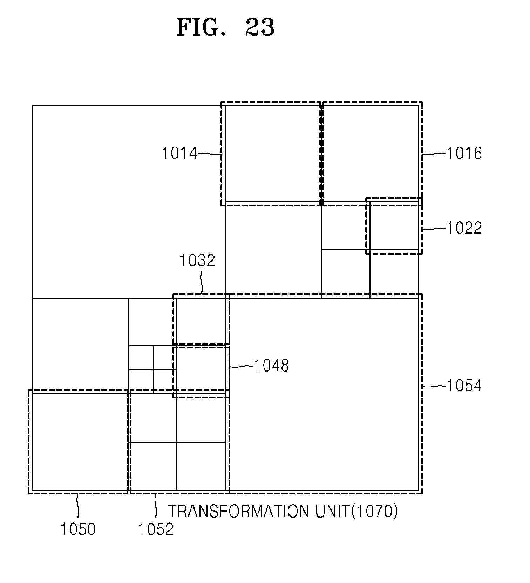

The color video frame encoding unit 320 prediction-encodes the obtained multi-view color video frame. In particular, as will be described below with reference to FIGS. 12 to 24, the color video frame encoding unit 320 according to the current embodiment may encode the multi-view color video frame based on coding units having a hierarchical structure, instead of general macro blocks. The color video frame encoding unit 320 may determine coding units having a tree structure, including coding units corresponding to a coded depth, from among hierarchical coding units corresponding to depths each denoting the number of times at least one maximum coding unit is spatially split, for each of the at least one maximum coding unit that is split from the multi-view color video frame; may determine partitions for prediction-encoding each of the coding units corresponding to the coded depth; and may determine transformation units having a tree structure by performing transformation based on transformation units having a hierarchical structure.

When the color video frame encoding unit 320 encodes the multi-view color video frame, the depth map frame encoding unit 330 prediction-encodes the corresponding depth map frame based on a result of the prediction-encoded multi-view color video frame. Specifically, the depth map frame encoding unit 330 may set coding units, partition units, and transformation units of each of at least one maximum coding unit that is split from the corresponding depth map frame in a split shape of the multi-view color video frame, based on split information including information about coding units, partition units, and transformation units of each of maximum coding units determined by encoding the multi-view color video frame; and may prediction-encode the depth map frame based on the set coding units, partition units, and transformation units.

FIG. 4 illustrates a case where a corresponding depth map frame 420 is split, based on split information about a multi-view color video frame 410, according to an embodiment of the present invention.

If the multi-view color video frame 410 is split as illustrated in FIG. 4, the depth map frame encoding unit 330 of FIG. 3 may split the corresponding depth map frame 420 in a split shape corresponding to that of the multi-view color video frame 410, without actually encoding the corresponding depth map frame 410 and determining a split shape of the corresponding depth map frame 410 based on a cost. Here, the split shape may be a split shape of a data unit from among coding units, partition units, and transformation units for each maximum coding unit as will be described below. As will be described below, in general, a split shape of each of coding units, partition units, and transformation units may be determined by encoding a corresponding frame while applying various split shapes to the corresponding frame, comparing Rate-Distortion(RD) costs according to results of encoding the corresponding frame, and determining a split shape having a minimum RD cost as a final split shape. However, in order to encode the corresponding depth map frame 420, the depth map frame encoding unit 330 according to the current embodiment may determine a split shape of a target data unit to be the same as a split shape of data units of the encoded multi-view color video frame 410 without a process for determining split shapes of the coding units, the partition units, and the transformation units by applying various split shapes.

Also, the depth map frame encoding unit 330 may determine a prediction mode for a depth map frame block to be the same as information about a prediction mode for a corresponding multi-view color video frame block that is prediction-encoded, and may prediction-encode the depth map frame block according to the determined prediction mode. In other words, the depth map frame encoding unit 330 may directly use the information about the prediction mode for the corresponding multi-view color video frame block without encoding the depth map frame block in various prediction modes, e.g., a skip mode, an inter prediction mode, an intra prediction mode, and the like.

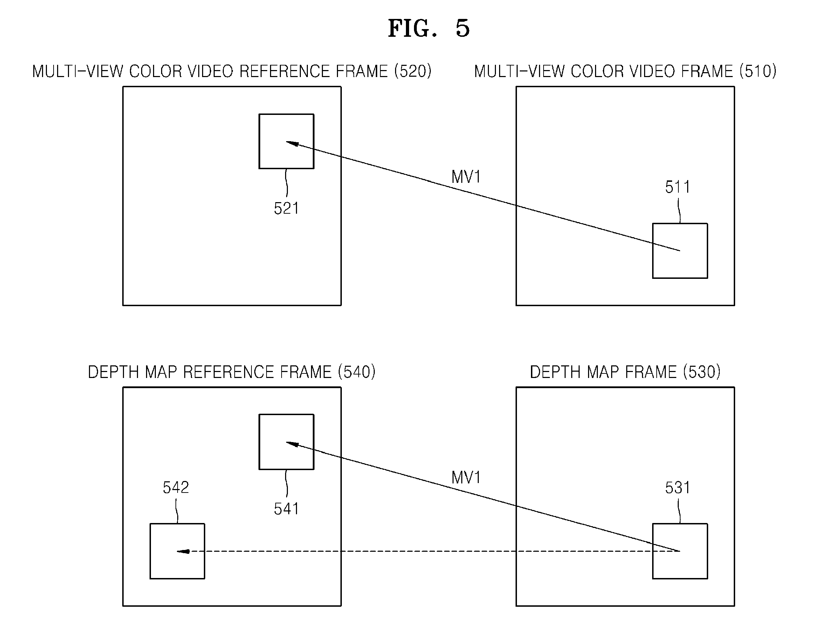

FIG. 5 illustrates a case where a block of a corresponding depth map frame is encoded based on a block of a multi-view color video frame encoded according to a skip mode, according to an embodiment of the present invention.

Referring to FIG. 5, when a block 511 of an encoded multi-view color video frame 510 is prediction-encoded according to the skip mode, the depth map frame encoding unit 330 may also prediction-encode a corresponding block 531 of a depth map frame 530, which is disposed at the same location as the block 511, according to the skip mode. As illustrated in FIG. 5, if a predicted motion vector determined using a motion vector of a neighboring block of the block 511 is MV1, then the depth map frame encoding unit 330 may set a predicted motion vector of the block 531 of the depth map frame 530 to be MV1, and may prediction-encode the block 531 of the depth map frame 530, based on a reference block 541 of a depth map reference frame 540 corresponding to a multi-view color video reference frame 520. As described above, the depth map frame encoding unit 330 may directly use motion information of a multi-view color video frame block corresponding to a depth map frame block without directly performing motion estimation on the depth map frame block. As described above, when the block 511 of the corresponding multi-view color video frame 510 is in the skip mode, the depth map frame encoding unit 330 may encode only specific index information indicating the skip mode as encoding information of the depth map frame 530.

On the other hand, even if the block 511 of the corresponding multi-view color video frame 510 is in the skip mode, the depth map frame encoding unit 330 may determine a reference block 542 by performing motion estimation on the block 531 of the depth map frame 530. In this case, additional syntax may be used to signal that the motion information of the block 511 of the multi-view color video frame 510 is not used.

Also, when the block 511 of the encoded multi-view color video frame 510 is prediction-encoded in an inter mode, the depth map frame encoding unit 330 may also prediction-encode the block 531 of the depth map frame 530 in the inter mode. If a motion vector of the block 511 of the multi-view color video frame 510 is MV1, the depth map frame encoding unit 330 may set a motion vector of the block 531 of the depth map frame 530 to be MV1, and may prediction-encode the block 531 of the depth map frame 530 by performing motion estimation using the reference block 541 of the depth map reference frame 540 corresponding to the multi-view color video reference frame 520.

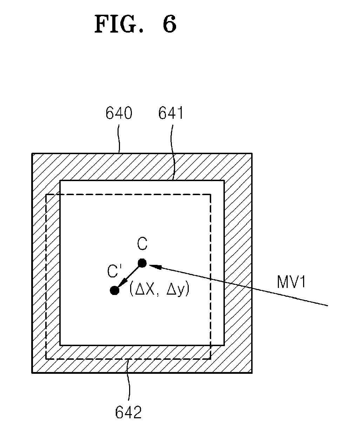

FIG. 6 illustrates a case where a motion vector of a block of a corresponding depth map frame is determined based on a motion vector of a block of a multi-view color video frame, according to an embodiment of the present invention.

Referring to FIG. 6, the depth map frame encoding unit 330 according to the current embodiment may determine an optimum motion vector of a block of a depth map frame according to a motion vector MV1 of a corresponding block of an encoded multi-view color video frame, which is disposed at the same location of the block of the depth map frame, or by changing the motion vector MV1 within a predetermined pixel range 640. As illustrated in FIG. 6, a reference block 642 closest to the block of the depth map frame may be determined by calculating costs while moving a reference block 641 determined according to the motion vector MV1 of the block of the multi-view color video frame and determining the location of a reference block having a minimum cost. When the difference between the locations of a center C of the reference block 641 and a center C' of the reference block 642 is (Δx, Δy), the depth map frame encoding unit 330 may determine the optimum motion vector by adding the difference (Δx, Δy) which is hereinafter referred to as an adjustment value to the motion vector MV1 of the block of the multi-view color video frame. The depth map frame encoding unit 330 may encode the adjustment value (Δx, Δy) as motion vector information of the depth map frame block.

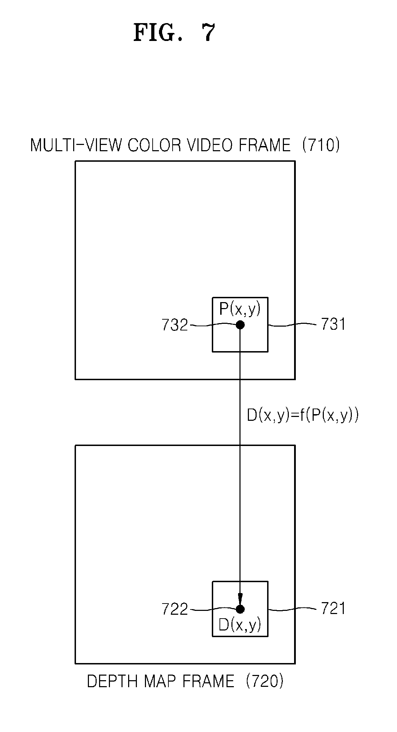

FIG. 7 illustrates a case where a block of a corresponding depth map frame is intra-predicted based on a block of a multi-view color video frame, according to an embodiment of the present invention.

Referring to FIG. 7, the depth map frame encoding unit 330 may intra-predict a block 721 of a depth map frame 720 by using a block 731 of a multi-view color video frame 710, which is disposed at the same location as the block 721 of the depth map frame 720. Specifically, if a value of a pixel of the block 731 of the multi-view color video frame 710, which is encoded and is then restored, is P(x,y), and a predicted value of a pixel of the block 721 of the depth map frame 720, which is disposed at the same location as the pixel P(x,y), is D(x,y), then the depth map frame encoding unit 330 may predict the block 721 of the depth map frame 720 by using the block 731 of the multi-view color video frame 710, based on an equation: D(x,y)=f(P(x,y)). In this equation, a function f() may be a linear relation equation defined by a specific weight a and a specific offset b, e.g., f(x)=ax+b. The weight a and the offset b may be obtained by calculating a least square mean by using data obtained by sampling the multi-view color video frame 710 and the depth map frame 720, or may be preset values.

The depth map frame encoding unit 330 may set deblocking filtering or loop filtering to be on/off, based on on/off information regarding deblocking filtering or loop filtering set with respect to the corresponding multi-view color video frame 710.

Also, when sizes of the block 721 of the depth map frame 720 and the block 731 of the multi-view color video frame 710 vary according to a sampling ratio, e.g., YUV 4:4:4, 4:2:0, or 4:0:2, the depth map frame encoding unit 330 may down-sample the block 731 of the multi-view color video frame 710 to have a size equal to the size of the block 721 of the depth map frame 720, and may intra-predict the block 721 of the depth map frame 720 by using the down-sampled block 731.

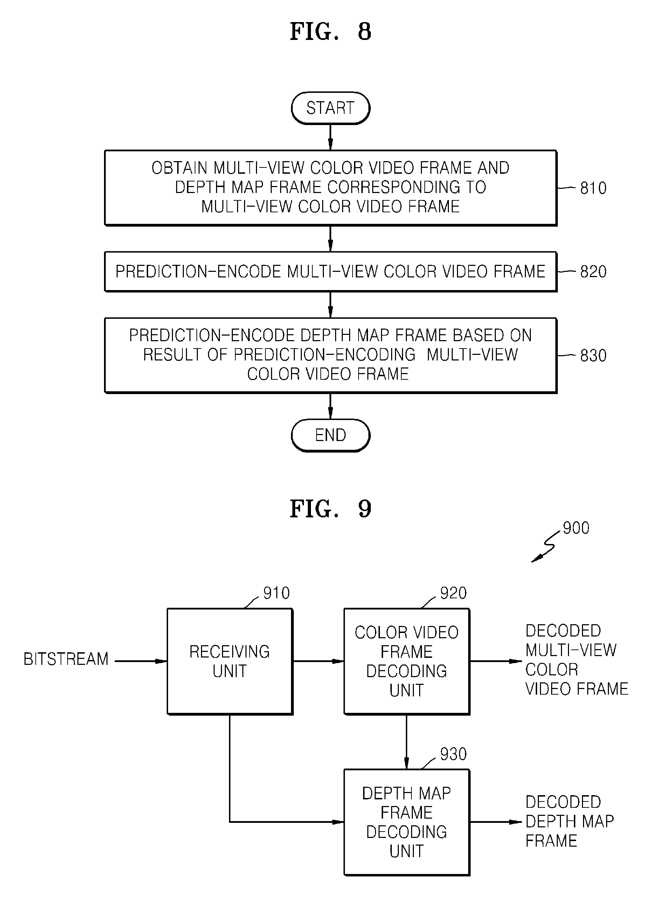

FIG. 8 is a flowchart illustrating a method of encoding multi-view video data, according to an embodiment of the present invention.

Referring to FIGS. 3 and 8, in operation 810, the image obtaining unit 310 obtains a multi-view color video frame and a depth map frame corresponding to the multi-view color video frame.

In operation 820, the color video frame encoding unit 320 prediction-encodes the multi-view color video frame. The color video frame encoding unit 320 may prediction-encode the multi-view color video frame by splitting the multi-view color video frame into at least one maximum coding unit and determining optimum coding units, partition units, and transformation units of each of the at least one maximum coding unit.

In operation 830, the depth map frame encoding unit 330 prediction-encodes the corresponding depth map frame, based on a result of prediction-encoding the multi-view color video frame. As described above, the depth map frame encoding unit 330 may split the depth map frame based on split information regarding the coding units, partition units, and transformation units of each of the at least one maximum coding unit split from the multi-view color video frame, may set a prediction mode for a block of the depth map frame based on information about a prediction mode for the multi-view color video frame, may intra-predict a corresponding block of the depth map frame, which is disposed at the same location as a block of the multi-view color video frame, by using a pixel value of the block of the multi-view color video frame, or may determine a motion vector of the block of the depth map frame by using a motion vector of the block of the multi-view color video frame. Also, the depth map frame encoding unit 330 may set filtering information to be applied to the block of the depth map frame, based on filtering information about the block of the multi-view color video frame.

FIG. 9 is a block diagram of a multi-view video data decoding apparatus 900 according to an embodiment of the present invention.

Referring to FIG. 9, the multi-view video data decoding apparatus 900 includes a receiving unit 910, a color video frame decoding unit 920, and a depth map frame decoding unit 930.

The receiving unit 910 receives a bitstream containing a result of encoding a multi-view color video frame and a depth map frame corresponding to the multi-view color video frame.

The color video frame decoding unit 920 decodes the encoded multi-view color video frame obtained from the bitstream. As will be described with reference to FIGS. 12 to 24 below, particularly, the color video frame decoding unit 920 according to an embodiment of the present invention may decode the multi-view color video frame based on hierarchical coding units. The color video frame decoding unit 920 obtains information about the size of each of at least one maximum coding unit split from the multi-view color video frame, a depth denoting the number of times each of the at least one maximum coding unit is spatially split, partitions used to prediction-encode hierarchical coding units according to depths, and transformation units having a hierarchical structure from the bitstream. Also, based on the obtained information, the color video frame decoding unit 920 determines coding units having a tree structure including coding units corresponding to a coded depth from among hierarchical coding units corresponding to depths each denoting the number of times one of the at least one maximum coding unit is spatially split, for each of the at least one maximum coding unit split from the multi-view color video frame; determines partitions for prediction-decoding each of the coding units corresponding to the coded depth; and determines transformation units having a tree structure.

The depth map frame decoding unit 930 prediction-decodes the corresponding depth map frame, based on a result of the decoded multi-view color video frame. Specifically, the depth map frame decoding unit 930 may set coding units, partition units, and transformation units of each of at least one maximum coding unit split from the corresponding depth map frame in a split shape of the multi-view color video frame, based on split information about the coding units, partition units, and transformation units of each of the at least one maximum coding unit, determined by decoding the multi-view color video frame; and may prediction-decode the depth map frame based on the set coding units, partition units, and transformation units.

Also, the depth map frame decoding unit 930 may set a prediction mode for a block of the depth map frame, based on information about a prediction mode for the decoded multi-view color video frame; may intra-predict a block of the depth map frame, which is disposed at the same location as a block of the multi-view color video frame, based on a pixel value of the block of the multi-view color video frame; and determine a motion vector for the block of the depth map frame, based on a motion vector of the block of the multi-view color video frame. Also, the depth map frame decoding unit 330 may set filtering information to be applied to the block of the depth map frame, based on filtering information about the corresponding block of the decoded multi-view color video frame.

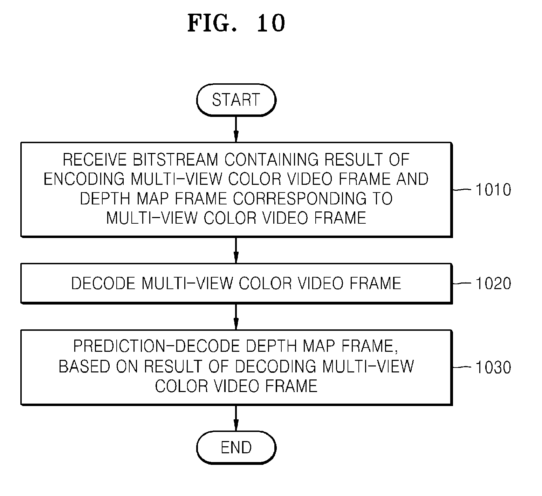

FIG. 10 is a flowchart illustrating a method of decoding multi-view video data, according to an embodiment of the present invention.

Referring to FIGS. 9 and 10, in operation 1010, the receiving unit 910 receives a bitstream containing a result of encoding a multi-view color video frame and a depth map frame corresponding to the multi-view color video frame.

In operation 1020, the color video frame decoding unit 920 decodes the encoded multi-view color video frame obtained from the bitstream.

In operation 1030, the depth map frame decoding unit 930 prediction-decodes the corresponding depth map frame, based on a result of decoding the multi-view color video frame.

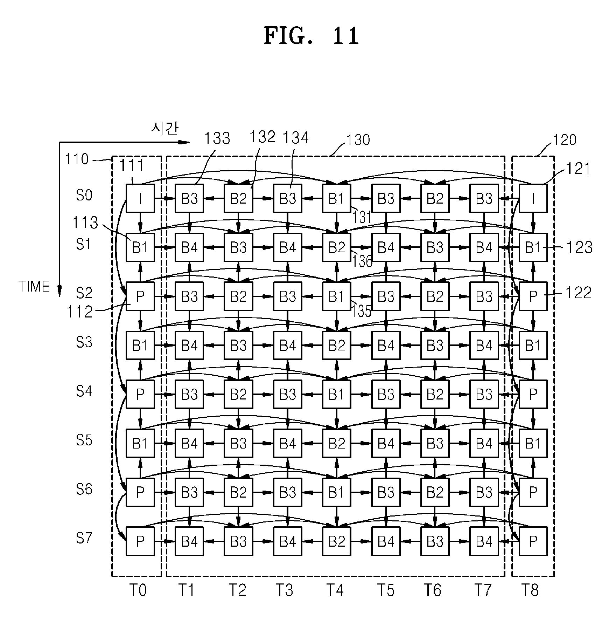

FIG. 11 illustrates multi-view color video frames encoded based on a method of encoding multi-view video and decoded based on a method of decoding multi-view video, according to an embodiment of the present invention.

The color video frame encoding unit 320 of FIG. 3 compression-encodes multi-view video, based on a temporal correlation and a spatial correlation between inter-views of cameras.

In FIG. 11, the x-axis denotes time, and the y-axis denotes viewpoints. On the x-axis, 'T0' to 'T8' denote sampling times of an image. On the y-axis, 'S0' to 'S8' denote different viewpoints. In FIG. 11, each row denotes an image picture group captured from the same viewpoint, and each column denotes multi-view videos captured at the same point of time.

The color video frame encoding unit 320 of FIG. 3 periodically generates intra pictures for an image captured from a basic viewpoint, and prediction-encodes other pictures by performing temporal prediction or inter-view prediction based on the intra pictures.

Temporal prediction is performed using a temporal relationship between images captured from the same viewpoint, i.e., images in the same row in FIG. 11. For temporal prediction, a predicting scheme using hierarchical B pictures may be used. Inter-view prediction is performed using a spatial relationship between images at the same point of time, i.e., images in the same column in FIG. 11.

In the predicting scheme for predicting a multi-view video picture by using hierarchical B pictures, when prediction is performed using a temporal relationship between images from the same viewpoint, i.e., images in the same row, an image picture group from the same viewpoint is prediction-encoded as bi-directional pictures (hereinafter referred to as 'B pictures'), based on anchor pictures. Here, the anchor pictures mean pictures arranged in a column 110 at a first point of time T0 and a column 120 at a last point of time T8, which each include an intra picture, from among the columns in FIG. 11. The anchor pictures arranged in the columns 110 and 120 are prediction-encoded only through inter-view prediction, except for the intra pictures (hereinafter referred to as 'I pictures'). Pictures arranged in other columns except for the columns 110 and 120 including the I pictures are referred to as 'non-anchor pictures'.

For example, a case where image pictures captured from a first viewpoint S0 for a predetermined time are encoded using the hierarchical B pictures will now be described. Among the image pictures captured from the first viewpoint S0, a picture 111 captured at the first point of time T0 and a picture 121 captured at the last point of time T8 are encoded as the I pictures. Then, a picture 131 captured at a point of time T4 is bi-directionally prediction-encoded as a B picture, based on the I pictures 111 and 121 which are anchor pictures. A picture 132 captured at a point of time T2 is bi-directionally prediction-encoded as a B picture, based on the I picture 111 and the B picture 131. Similarly, a picture 133 captured at a point of time T1 is bi-directionally prediction-encoded based on the I picture 111 and the B picture 132, and a picture 134 captured at a point of time T3 is bi-directionally prediction-encoded based on the B picture 132 and the B picture 131. As described above, since image sequences captured from the same viewpoint are hierarchically and bi-directionally prediction-encoded using anchor pictures, this prediction-encoding method is referred to as a hierarchical B pictures. In 'Bn' of FIG. 11, n denotes a B picture that is n^{th} bi-directionally predicted (n=1, 2, 3, and 4). For example, 'B1' denotes a picture that is first bi-directionally predicted using anchor pictures which are I pictures or P pictures, 'B2' denotes a picture that is bi-directionally predicted after the B1 picture, 'B3' denotes a picture that is bi-directionally predicted after the B2 picture, and 'B4' denotes a picture that is bi-directionally predicted after the B3 picture.

To encode a multi-view video frame, first, image picture groups captured from the first viewpoint S0 which is a basic viewpoint are encoded using the hierarchical B pictures described above. To encode image sequences captured from the other viewpoints, first, image pictures captured from odd-numbered viewpoints S2, S4, and S6 and a last viewpoint S7 in the columns 110 and 120 are prediction-encoded using P pictures through inter-view prediction using the I pictures 111 and 121 from the first viewpoint S0. Image pictures captured from even-numbered viewpoints S1, S3, and S5 in the columns 110 and 120 are bi-directionally predicted as B pictures by using image pictures from adjacent viewpoints through inter-view prediction. For example, a B picture 113 captured from a second viewpoint S1 at the point of time T0 is bi-directionally predicted using the I picture 111 from the viewpoint S1 and a P picture 112 from the viewpoint S2, which are adjacent viewpoints.

When image pictures from all the viewpoints in the columns 110 and 120 are each encoded using one of the I pictures, the B pictures, and the P pictures, the non-anchor pictures 130 are bi-directionally prediction-encoded through temporal prediction using hierarchical B pictures and inter-view prediction, as described above.

Among the non-anchor pictures 130, the pictures captured from the odd-numbered viewpoints S2, S4, and S6 and the last viewpoint S7 are each bi-directionally prediction-encoded using anchor pictures from the same viewpoint through temporal prediction using hierarchical B pictures. Among the non-anchor pictures 130, the image pictures captured from the even-numbered viewpoints S1, S3, S5, and S7 are bi-directionally prediction-encoded not only through temporal prediction using hierarchical B pictures but also through inter-view prediction using pictures from adjacent viewpoints. For example, a picture 136 captured from the viewpoint S2 at the point of time T4 is predicted using the anchor pictures 113 and 123 and pictures 131 and 135 from adjacent viewpoints.

The P pictures included in the columns 110 and 120 are each prediction-encoded using either an I picture captured from a different viewpoint at the same point of time or a previous P picture, as described above. For example, a P picture 122 captured from the viewpoint S2 at the last point of time T8 is prediction-encoded using the I picture 121 captured from the first viewpoint S0 at the last point of time T8, as a reference picture.

A video encoding method and apparatus capable of prediction-encoding prediction units and partitions based on coding units having a tree structure, and a video decoding method and apparatus capable of prediction-decoding prediction units and partitions based on coding units having a tree structure will now be described in detail with reference to FIGS. 12 to 24. The video encoding method and apparatus which will be described below may be applied to the color video frame encoding unit 320 of FIG. 3, and the video decoding method and apparatus which will be described below may be applied to the color video frame decoding unit 920 of FIG. 9.

FIG. 12 is a block diagram of a video encoding apparatus 100 capable of performing video prediction based on coding units having a tree structure, according to an embodiment of the present invention.

The video encoding apparatus 100 capable of performing video prediction based on coding units having a tree structure includes a maximum coding unit splitter 110, a coding unit determiner 120, and an output unit 130. For convenience of explanation, the video encoding apparatus 100 capable of performing video prediction based on coding units having a tree structure will be hereinafter referred to as 'the video encoding apparatus 100'.

The maximum coding unit splitter 110 may split a current picture of an image based on a maximum coding unit for the current picture. If the current picture is larger than the maximum coding unit, image data of the current picture may be split into at least one maximum coding unit. The maximum coding unit according to an embodiment of the present invention may be a data unit having a size of 32x32, 64x64, 128x128, 256x256, etc., wherein a shape of the data unit is a square having a width and length in squares of 2. The image data may be output to the coding unit determiner 120 according to the at least one maximum coding unit.

A coding unit according to an embodiment of the present invention may be characterized by a maximum size and a depth. The depth denotes a number of times the coding unit is spatially split from the maximum coding unit, and as the depth deepens, coding units corresponding to depths may be split from the maximum coding unit to a minimum coding unit. A depth of the maximum coding unit may be determined as an uppermost depth, and the minimum coding unit may be determined as a lowermost coding unit. Since a size of a coding unit corresponding to each depth decreases as the depth of the maximum coding unit deepens, a coding unit corresponding to an upper depth may include a plurality of coding units corresponding to lower depths.

As described above, the image data of the current picture is split into the maximum coding units according to a maximum size of the coding unit, and each of the maximum coding units may include coding units that are split according to depths. Since the maximum coding unit according to an embodiment of the present invention is split according to depths, the image data of a spatial domain included in the maximum coding unit may be hierarchically classified according to the depths.

A maximum depth and a maximum size of a coding unit, which limit the total number of times a height and a width of the maximum coding unit are hierarchically split, may be predetermined.

The coding unit determiner 120 encodes at least one split region obtained by splitting a region of the maximum coding unit according to depths, and determines a depth to output a finally encoded image data according to the at least one split region. In other words, the coding unit determiner 120 determines a coded depth by encoding the image data in the coding units corresponding to depths in units of the maximum coding units of the current picture, and selecting a depth having the least encoding error. The determined coded depth and the image data in each of the maximum coding units are output to the output unit 130.

The image data in each of the maximum coding units is encoded based on the coding units corresponding to depths, according to at least one depth equal to or below the maximum depth, and results of encoding the image data based on the coding units corresponding to depths are compared. A depth having the least encoding error may be selected after comparing encoding errors of the coding units corresponding to depths. At least one coded depth may be selected for each of the maximum coding units.

The size of the maximum coding unit is split as a coding unit is hierarchically split according to depths, and the number of coding units increases. Also, even if coding units included in one maximum coding unit correspond to the same depth, whether each of the coding units will be split to a lower depth is determined by measuring an encoding error of the image data of each of the coding units. Thus, since even data included in one maximum coding unit has a different encoding error corresponding to a depth, according to the location of the data, a coded depth may be differently set according to the location of the data. Accordingly, at least one coded depth may be set for one maximum coding unit, and the image data of the maximum coding unit may be divided according to coding units of the at least one coded depth.

Accordingly, the coding unit determiner 120 according to an embodiment of the present invention may determine coding units having a tree structure included in a current maximum coding unit. The 'coding units having a tree structure' according to an embodiment of the present invention include coding units corresponding to a depth determined to be the coded depth, from among all coding units corresponding to depths included in the current maximum coding unit. Coding units corresponding to a coded depth may be hierarchically determined according to depths in the same region of the maximum coding unit, and may be independently determined in different regions of the maximum coding unit. Similarly, a coded depth in a current region may be independently determined from a coded depth in another region.

A maximum depth according to an embodiment of the present invention is an index related to the number of splitting times from a maximum coding unit to a minimum coding unit. A first maximum depth according to an embodiment of the present invention may denote the total number of splitting times from the maximum coding unit to the minimum coding unit. A second maximum depth according to an embodiment of the present invention may denote the total number of depth levels from the maximum coding unit to the minimum coding unit. For example, when a depth of the maximum coding unit is 0, a depth of a coding unit obtained by splitting the maximum coding unit once may be set to 1, and a depth of a coding unit obtained by splitting the maximum coding unit twice may be set to 2. If a coding unit obtained by splitting the maximum coding unit four times is the minimum coding unit, then depth levels of depths 0, 1, 2, 3 and 4 exist. Thus, the first maximum depth may be set to 4, and the second maximum depth may be set to 5.

Prediction-encoding and transformation may be performed on the maximum coding unit. Similarly, prediction-encoding and transformation are performed in units of maximum coding units, based on coding units corresponding to depths and according to depths equal to or less than the maximum depth.

Since the number of coding units corresponding to depths increases whenever the maximum coding unit is split according to depths, encoding including prediction- encoding and transformation should be performed on all of the coding units corresponding to depths generated as a depth deepens. For convenience of explanation, prediction- encoding and transformation will now be described based on a coding unit of a current depth, included in at least one maximum coding unit.

The video encoding apparatus 100 may variously select a size or shape of a data unit for encoding image data. In order to encode the image data, operations, such as prediction-encoding, transformation, and entropy encoding, are performed. At this time, the same data unit may be used for all of the operations or different data units may be used for each operation.

For example, the video encoding apparatus 100 may select not only a coding unit for encoding the image data, but also a data unit different from the coding unit so as to perform prediction-encoding on image data in the coding unit.

In order to prediction-encode the maximum coding unit, prediction-encoding may be performed based on a coding unit corresponding to a coded depth, i.e., based on a coding unit that is no longer split to coding units corresponding to a lower depth. Hereinafter, the coding unit that is no longer split and becomes a basis unit for prediction-encoding will now be referred to as a 'prediction unit'. Partitions obtained by splitting the prediction unit may include a data unit obtained by splitting at least one of a height and a width of the prediction unit. The partitions may be data units obtained by splitting a prediction unit of a coding unit, and the prediction unit may be a partition having the same size as that of the coding unit.

For example, when a coding unit of 2Nx2N (where N is a positive integer) is no longer split, this coding unit becomes a prediction unit of 2Nx2N, and a size of a partition may be 2Nx2N, 2NxN, Nx2N, or NxN. Examples of a partition type include symmetrical partitions that are obtained by symmetrically splitting a height or width of the prediction unit, partitions obtained by asymmetrically splitting the height or width of the prediction unit, such as 1:n or n:1, partitions that are obtained by geometrically splitting the prediction unit, and partitions having arbitrary shapes.

A prediction mode of the prediction unit may be at least one of an intra mode, a inter mode, and a skip mode. For example, the intra mode or the inter mode may be performed on a partition of 2Nx2N, 2NxN, Nx2N, or NxN. Also, the skip mode may be performed only on a partition of 2Nx2N. Encoding may be independently performed on one prediction unit in each coding unit, and a prediction mode having a least encoding error may be selected.

Also, the video encoding apparatus 100 may perform transformation on the image data in a coding unit based not only on the coding unit for encoding the image data, but also based on a data unit that is different from the coding unit. In order to perform transformation on the coding unit, transformation may be performed based on a data unit having a size smaller than or equal to that of the coding unit. For example, transformation units may include a data unit for the intra mode and a data unit for the inter mode.

Similarly to coding units having a tree structure according to an embodiment of the present invention, a transformation unit in a coding unit may be recursively split into smaller sized transformation units. Thus, residual data in the coding unit may be divided according to transformation units having a tree structure according to transformation depths.

A transformation unit according to an embodiment of the present invention may also be assigned a transformation depth denoting a number of times the height and width of a coding unit are split to obtain the transformation unit. For example, a transformation depth may be 0 when a size of a transformation unit for a 2Nx2N current coding unit is 2Nx2N, a transformation depth may be 1 when a size of a transformation unit for the 2Nx2N current coding unit is NxN, and a transformation depth may be 2 when a size of a transformation unit for the 2Nx2N current coding unit is N/2xN/2. That is, transformation units having a tree structure may also be set according to transformation depths.

Encoding information for each coded depth requires not only information about the coded depth, but also about information related to prediction-encoding and transformation. Accordingly, the coding unit determiner 120 may not only determine a coded depth having a least encoding error, but also determine a partition type in a prediction unit, a prediction mode for each prediction unit, and a size of a transformation unit for transformation.

Coding units having a tree structure included in a maximum coding unit and a method of determining a prediction unit/partition and a transformation unit, according to embodiments of the present invention, will be described in detail later.

The coding unit determiner 120 may measure encoding errors of coding units corresponding to depths by using Rate-Distortion Optimization based on Lagrangian multipliers.

The output unit 130 outputs the image data of the maximum coding unit, which is encoded based on the at least one coded depth determined by the coding unit determiner 120, and information about the encoding mode of each of depths, in a bitstream.

The encoded image data may be a result of encoding residual data of an image.

The information about the encoding mode of each of depths may include information about the coded depth, about the partition type in the prediction unit, the prediction mode, and the size of the transformation unit.

The information about the coded depth may be defined using split information according to depths, which indicates whether encoding is to be performed on coding units of a lower depth instead of a current depth. If a current depth of a current coding unit is the coded depth, then the current coding unit is encoded using coding units corresponding to the current depth, and split information about the current depth may thus be defined such that the current coding unit of the current depth may not be split any further into coding units of a lower depth. Reversely, if the current depth of the current coding unit is not the coded depth, then coding units of a lower depth should be encoded and the split information about the current depth may thus be defined such that the current coding unit of the current depth may be split into coding units of_a lower depth.

If the current depth is not the coded depth, encoding is performed on the coding units of the lower depth. Since at least one coding unit of the lower depth exists in one coding unit of the current depth, encoding is repeatedly performed on each coding unit of the lower depth, and coding units having the same depth may thus be recursively encoded.

Since coding units having a tree structure should be determined in one maximum coding unit and information about at least one encoding mode is determined for each coding unit of a coded depth, information about at least one encoding mode may be determined for one maximum coding unit. Also, image data of the maximum coding unit may have a different coded depth according to the location thereof since the image data is hierarchically split according to depths. Thus, information about a coded depth and an encoding mode may be set for the image data.

Accordingly, the output unit 130 according to an embodiment of the present invention may assign encoding information about a corresponding coded depth and an encoding mode to at least one of coding units, prediction units, and a minimum unit included in the maximum coding unit.

The minimum unit according to an embodiment of the present invention is a rectangular data unit obtained by splitting a minimum coding unit of a lowermost depth by 4. Alternatively, the minimum unit may be a maximum rectangular data unit that may be included in all of the coding units, prediction units, partition units, and transformation units included in the maximum coding unit.

For example, encoding information output via the output unit 130 may be classified into encoding information of each of coding units corresponding to depths, and encoding information of each of prediction units. The encoding information of each of coding units corresponding to depths may include prediction mode information and partition size information. The encoding information of each of prediction units may include information about an estimated direction of an inter mode, about a reference image index of the inter mode, about a motion vector, about a chroma component of the intra mode, and about an interpolation method of an intra mode.

Information about a maximum size of coding units defined in units of pictures, slices, or GOPs, and information about a maximum depth may be inserted into a header of a bitstream, a sequence parameter set (SPS) or a Picture parameter set (PPS).

Also, information about a maximum size and a minimum size of a transformation unit available in a current video may be transmitted via a header of a bitstream, an SPS, or a PPS. The output unit 130 may encode and output information about scalability of coding units.

In the video encoding apparatus 100 according to an embodiment of the present invention, coding units corresponding to depths may be coding units obtained by dividing a height or width of a coding unit of an upper depth by two. In other words, when the size of a coding unit of a current depth is 2Nx2N, the size of a coding unit of a lower depth is NxN. Also, the 2Nx2N coding unit may include four NxN coding units of the lower depth at most.

Accordingly, the video encoding apparatus 100 may form coding units having a tree structure by determining coding units having an optimum shape and size for each maximum coding unit, based on the size of each maximum coding unit and a maximum depth determined considering characteristics of a current picture. Also, since each maximum coding unit may be encoded according to any one of various prediction modes and transformation methods, an optimum encoding mode may be determined considering characteristics of coding units of various image sizes.

Thus, if an image having very high resolution or a very large amount of data is encoded in units of conventional macroblocks, a number of macroblocks per picture excessively increases. Thus, an amount of compressed information generated for each macroblock increases, and thus it is difficult to transmit the compressed information and data compression efficiency decreases. However, the video encoding apparatus 100 is capable of controlling a coding unit based on characteristics of an image while increasing a maximum size of the coding unit in consideration of a size of the image, thereby increasing image compression efficiency.

FIG. 13 is a block diagram of a video decoding apparatus 200 capable of performing video prediction based on coding units having a tree structure, according to an embodiment of the present invention.

The video decoding apparatus 200 capable of performing video prediction based on coding units having a tree structure includes a receiver 210, an image data and encoding information extractor 220, and an image data decoder 230. For convenience of explanation, the video decoding apparatus 200 capable of performing video prediction based on coding units having a tree structure will now be referred to as the 'video decoding apparatus 200'.

Definitions of various terms, such as a coding unit, a depth, a prediction unit, a transformation unit, and information about various encoding modes, which are used below to explain decoding operations of the video decoding apparatus 200, are identical to those of the video encoding apparatus 100 described above with reference to FIG. 12.

The receiver 210 receives and parses a bitstream of an encoded video. The image data and encoding information extractor 220 extracts encoded image data for each of coding units having a tree structure in units of maximum coding units, from the parsed bitstream, and then outputs the extracted image data to the image data decoder 230. The image data and encoding information extractor 220 may extract information about a maximum size of coding units of a current picture, from a header regarding the current picture, an SPS, or a PPS.

Also, the image data and encoding information extractor 220 extracts information about a coded depth and an encoding mode for the coding units having the tree structure in units of the maximum coding unit, from the parsed bitstream. The extracted information about the coded depth and the encoding mode is output to the image data decoder 230. In other words, the image data in the bitstream may be split into the maximum coding units so that the image data decoder 230 may decode the image data in units of the maximum coding units.

The information about the coded depth and the encoding mode for each of the maximum coding units may be set for_at least one coded depth. The information about the encoding mode for each coded depth may include information about a partition type of a corresponding coding unit corresponding to the coded depth, about a prediction mode, and a size of a transformation unit. Also, splitting information according to depths may be extracted as the information about the coded depth.

The information about the coded depth and the encoding mode for each of the maximum coding units extracted by the image data and encoding information extractor 220 is information about a coded depth and an encoding mode determined to generate a minimum encoding error when an encoding side, e.g., the video encoding apparatus 100, repeatedly encodes each of coding units corresponding to depths in units of maximum coding units. Accordingly, the video decoding apparatus 200 may restore an image by decoding the image data according to the coded depth and the encoding mode_that generates the minimum encoding error.

Since encoding information about the coded depth and the encoding mode may be assigned to data units from among corresponding coding units, prediction units, and a minimum unit, the image data and encoding information extractor 220 may extract the information about the coded depth and the encoding mode in units of the data units. If the information about the coded depth and the encoding mode for each of the maximum coding units is recorded in units of the data units, data units including information about the same coded depth and encoding mode may be inferred to be data units included in the same maximum coding unit.

The image data decoder 230 restores the current picture by decoding the image data in each of the maximum coding units, based on the information about the coded depth and the encoding mode for each of the maximum coding units. In other words, the image data decoder 230 may decode the encoded image data based on a parsed partition type, prediction mode, and transformation unit for each of the coding units having the tree structure included in each of the maximum coding units. A decoding process may include a prediction process including intra prediction and motion compensation, and an inverse transformation process.

The image data decoder 230 may perform intra prediction or motion compensation on each of the coding units according to partitions and a prediction mode thereof, based on the information about the partition type and the prediction mode of prediction units of each of coding units according to coded depths.

Also, in order to perform inverse transformation on each of the maximum coding units, the image data decoder 230 may parse information about transformation units having a tree structure of each of the coding units and perform inverse transformation based on the transformation units of each of the coding units. Through inverse transformation, pixel values of a spatial domain of each of the coding units may be restored.

The image data decoder 230 may determine a coded depth of a current maximum coding unit, based on split information according to depths. If the split information indicates that image data is no longer split in the current depth, the current depth is a coded depth. Thus, the image data decoder 230 may decode image data of a current maximum coding unit by using the information about the partition type of the prediction unit, the prediction mode, and the size of the transformation unit of a coding unit corresponding to a current depth.

In other words, data units containing encoding information including the same split information may be gathered by observing encoding information assigned to a data unit from among the coding unit, the prediction unit, and the minimum unit, and the gathered data units may be considered as one data unit to be decoded according to the same encoding mode by the image data decoder 230.

The video decoding apparatus 200 may obtain information about a coding unit that generates a least encoding error by recursively encoding each of the maximum coding units, and may use the information to decode the current picture. In other words, the encoded image data in the coding units having the tree structure determined to be optimum coding units in units of the maximum coding units may be decoded.

Accordingly, even if image data has high resolution and a very large amount of data, the image data may be efficiently decoded to be restored by using a size of a coding unit and an encoding mode, which are adaptively determined according to characteristics of the image data, based on information about an optimum encoding mode received from an encoding side.

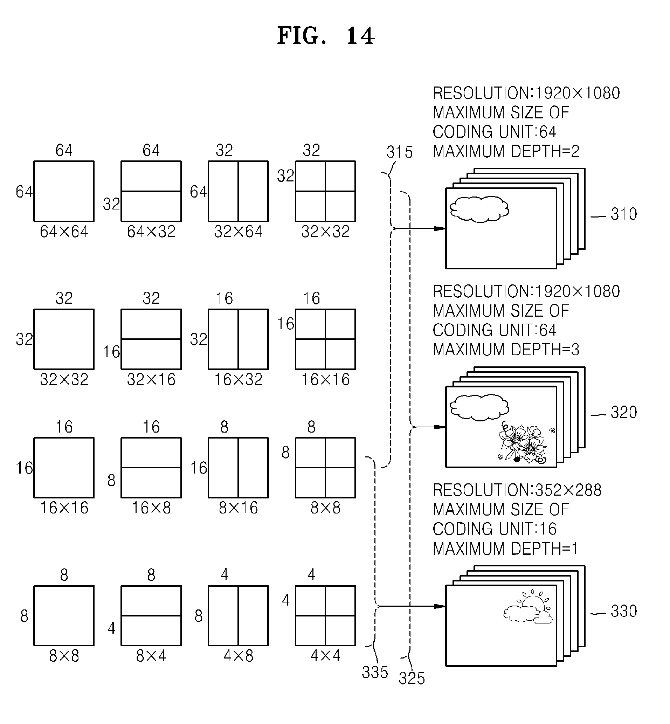

FIG. 14 illustrates a concept of coding units according to an embodiment of the present invention.

A size of a coding unit may be expressed in width x height, and may be 64x64, 32x32, 16x16, and 8x8. A coding unit of 64x64 may be split into partitions of 64x64, 64x32, 32x64, or 32x32, and a coding unit of 32x32 may be split into partitions of 32x32, 32x16, 16x32, or 16x16, a coding unit of 16x16 may be split into partitions of 16x16, 16x8, 8x16, or 8x8, and a coding unit of 8x8 may be split into partitions of 8x8, 8x4, 4x8, or 4x4.

In video data 310, a resolution is 1920x1080, a maximum size of a coding unit is 64, and a maximum depth is 2. In video data 320, a resolution is 1920x1080, a maximum size of a coding unit is 64, and a maximum depth is 3. In video data 330, a resolution is 352x288, a maximum size of a coding unit is 16, and a maximum depth is 1. The maximum depth shown in FIG. 14 denotes a total number of splits from a maximum coding unit to a minimum decoding unit.

If a resolution is high or an amount of data is large, a maximum size of a coding unit may be relatively large so as to not only increase encoding efficiency but also to accurately reflect characteristics of an image. Accordingly, the maximum size of the coding unit of the video data 310 and 320 having the higher resolution than the video data 330 may be 64.

Since the maximum depth of the video data 310 is 2, coding units 315 of the vide data 310 may include a maximum coding unit having a long axis size of 64, and coding units having long axis sizes of 32 and 16 since depths are deepened to two layers by splitting the maximum coding unit twice. Meanwhile, since the maximum depth of the video data 330 is 1, coding units 335 of the video data 330 may include a maximum coding unit having a long axis size of 16, and coding units having a long axis size of 8 since depths are deepened to one layer by splitting the maximum coding unit once.

Since the maximum depth of the video data 320 is 3, coding units 325 of the video data 320 may include a maximum coding unit having a long axis size of 64, and coding units having long axis sizes of 32, 16, and 8 since the depths are deepened to 3 layers by splitting the maximum coding unit three times. As a depth deepens, detailed information may be precisely expressed.

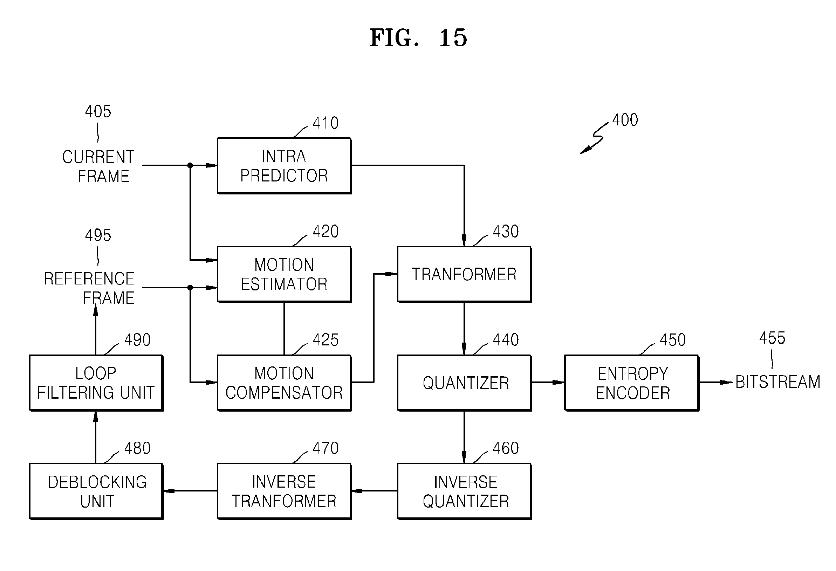

FIG. 15 is a block diagram of an image encoder 400 based on coding units, according to an embodiment of the present invention.

The image encoder 400 performs operations of the coding unit determiner 120 of the video encoding apparatus 100 to encode image data. Specifically, an intra predictor 410 performs intra prediction on coding units in an intra mode from among a current frame 405, and a motion estimator 420 and a motion compensator 425 performs inter estimation and motion compensation on coding units in an inter mode from among the current frame 405 by using the current frame 405 and a reference frame 495.

Data output from the intra predictor 410, the motion estimator 420, and the motion compensator 425 is output as a quantized transformation coefficient through a transformer 430 and a quantizer 440. The quantized transformation coefficient is restored as data in a spatial domain through an inverse quantizer 460 and an inverse transformer 470. The restored data in the spatial domain is output as the reference frame 495 after being post-processed through a deblocking unit 480 and a loop filtering unit 490. The quantized transformation coefficient may be output in a bitstream 455 through an entropy encoder 450.

In order to apply the image encoder 400 to the video encoding apparatus 100, all elements of the image encoder 400, i.e., the intra predictor 410, the motion estimator 420, the motion compensator 425, the transformer 430, the quantizer 440, the entropy encoder 450, the inverse quantizer 460, the inverse transformer 470, the deblocking unit 480, and the loop filtering unit 490 perform operations based on each coding unit from among coding units having a tree structure while considering the maximum depth of each maximum coding unit.

Particularly, the intra predictor 410, the motion estimator 420, and the motion compensator 425 determine partitions and a prediction mode of each coding unit from among the coding units having the tree structure while considering the maximum size and the maximum depth of a current maximum coding unit. The transformer 430 determines the size of the transformation unit in each coding unit from among the coding units having the tree structure.

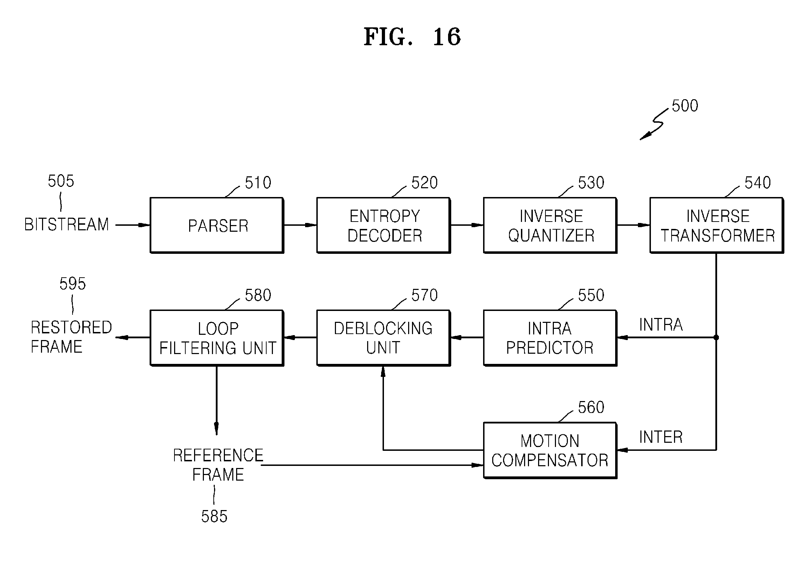

FIG. 16 is a block diagram of an image decoder 500 based on coding units, according to an embodiment of the present invention.

A parser 510 parses a bitstream 505 to obtain encoded image data to be decoded and encoding information required to decode the encoded image data. The encoded image data is output as inversely quantized data through an entropy decoder 520 and an inverse quantizer 530, and the inverse quantized data is restored to image data in a spatial domain through an inverse transformer 540.

With respect to the image data in the spatial domain, an intra predictor 550 performs intra prediction on coding units in an intra mode, and a motion compensator 560 performs motion compensation on coding units in an inter mode by using a reference frame 585.

The image data in the spatial domain, which passed through the intra predictor 550 and the motion compensator 560, may be output as a restored frame 595 after being post-processed through a deblocking unit 570 and a loop filtering unit 580. Also, the image data that is post-processed through the deblocking unit 570 and the loop filtering unit 580 may be output as the reference frame 585.

In order to decode the image data by using the image data decoder 230 of the video decoding apparatus 200, the image decoder 500 may perform operations that are performed after an operation of the parser 510.

In order to apply the image decoder 500 to the video decoding apparatus 200, all elements of the image decoder 500, i.e., the parser 510, the entropy decoder 520, the inverse quantizer 530, the inverse transformer 540, the intra predictor 550, the motion compensator 560, the deblocking unit 570, and the loop filtering unit 580 perform operations based on coding units having a tree structure, in units of maximum coding units.

Particularly, the intra prediction 550 and the motion compensator 560 determine partitions and a prediction mode for each of the coding units having the tree structure, and the inverse transformer 540 determines a size of a transformation unit for each of the coding units.

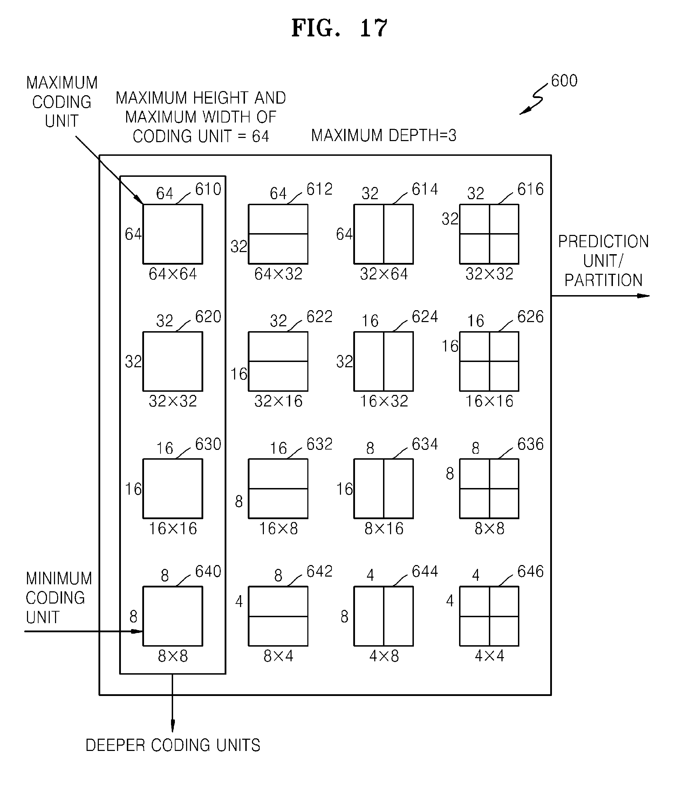

FIG. 17 is a diagram illustrating coding units corresponding to depths, and partitions, according to an embodiment of the present invention.

The video encoding apparatus 100 and the video decoding apparatus 200 according to an embodiment of the present invention use hierarchical coding units to consider characteristics of an image. A maximum height, a maximum width, and a maximum depth of a coding unit may be adaptively determined according to the characteristics of the image, or may be differently set by a user. Sizes of coding units corresponding to depths may be determined according to the predetermined maximum size of the coding unit.

In a hierarchical structure 600 of coding units according to an embodiment of the present invention, the maximum height and the maximum width of the coding units are each 64, and the maximum depth is 4. The maximum depth denotes a total number of splitting times from a maximum coding unit to a minimum coding unit. Since a depth deepens along a vertical axis of the hierarchical structure 600, a height and width of each of coding units corresponding to depths are each split. Also, a prediction unit and partitions, which are bases for prediction-encoding each of the coding units corresponding to depths, are shown along a horizontal axis of the hierarchical structure 600.

Specifically, in the hierarchical structure 600, a coding unit 610 is a maximum coding unit, and has a depth is 0 and a size of 64x64 (height x width). As the depth deepens along the vertical axis, a coding unit 620 having a size of 32x32 and a depth of 1, a coding unit 630 having a size of 16x16 and a depth of 2, a coding unit 640 having a size of 8x8 and a depth of 3, and a coding unit 650 having a size of 4x4 and a depth of 4 exist. The coding unit 650 having the size of 4x4 and the depth of 4 is a minimum coding unit.

A prediction unit and partitions of each coding unit are arranged along the horizontal axis according to each depth. If the coding unit 610 having the size of 64x64 and the depth of 0 is a prediction unit, the prediction unit may be split into partitions included in the coding unit 610, i.e. a partition 610 having a size of 64x64, partitions 612 having a size of 64x32, partitions 614 having a size of 32x64, or partitions 616 having a size of 32x32.

Similarly, a prediction unit of the coding unit 620 having the size of 32x32 and the depth of 1 may be split into partitions included in the coding unit 620, i.e. a partition 620 having a size of 32x32, partitions 622 having a size of 32x16, partitions 624 having a size of 16x32, and partitions 626 having a size of 16x16.

Similarly, a prediction unit of the coding unit 630 having the size of 16x16 and the depth of 2 may be split into partitions included in the coding unit 630, i.e. a partition 630 having a size of 16x16, partitions 632 having a size of 16x8, partitions 634 having a size of 8x16, and partitions 636 having a size of 8x8.

Similarly, a prediction unit of the coding unit 640 having the size of 8x8 and the depth of 3 may be split into partitions included in the coding unit 640, i.e. a partition 640 having a size of 8x8, partitions 642 having a size of 8x4, partitions 644 having a size of 4x8, and partitions 646 having a size of 4x4.

The coding unit 650 having the size of 4x4 and the depth of 4 is the minimum coding unit having a lowermost depth. A prediction unit of the coding unit 650 is set to only a partition 650 having a size of 4x4.

In order to determine a coded depth of the maximum coding unit 610, the coding unit determiner 120 of the video encoding apparatus 100 encodes all coding units corresponding to each depth, included in the maximum coding unit 610.

As the depth deepens, a number of coding units, which correspond to each depth and include data having the same range and the same size, increases. For example, four coding units corresponding to a depth of 2 are required to cover data included in one coding unit corresponding to a depth of 1. Accordingly, in order to compare results of encoding the same data according to depths, the coding unit corresponding to the depth of 1 and the four coding units corresponding to the depth of 2 are each encoded.

In order to perform encoding in units of depths, a least encoding error of each of the depths may be selected as a representative encoding error by encoding prediction units in each of the coding units corresponding to the depths, along the horizontal axis of the hierarchical structure 600. Alternatively, a least encoding error may be searched for by performing encoding in units of depths and comparing least encoding errors according to the depths, as the depth deepens along the vertical axis of the hierarchical structure 600. A depth and a partition having the least encoding error in the maximum coding unit 610 may be selected as a coded depth and a partition type of the maximum coding unit 610.

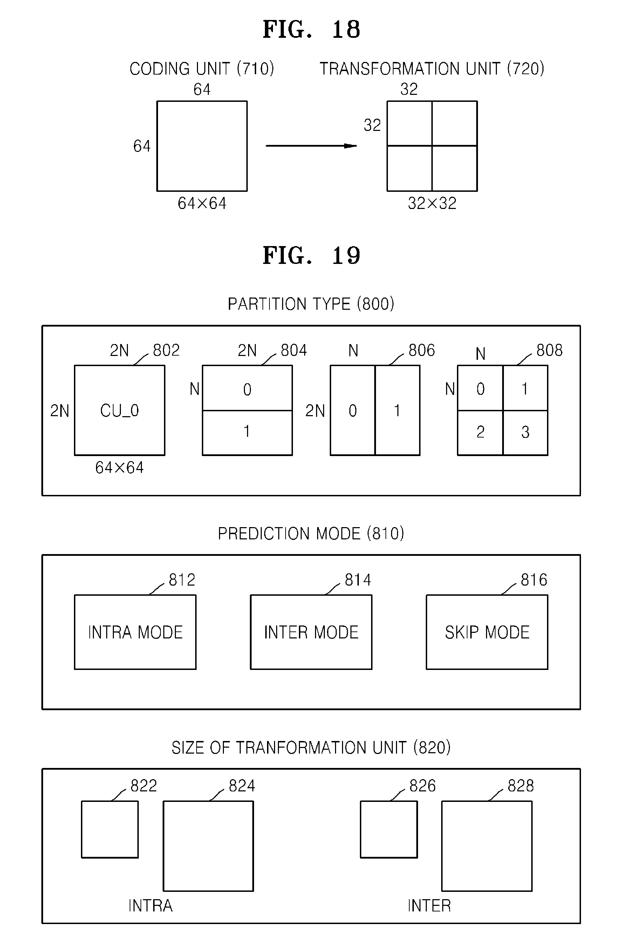

FIG. 18 is a diagram illustrating a relationship between a coding unit 710 and transformation units 720, according to an embodiment of the present invention.

The video encoding apparatus 100 (or the video decoding apparatus 200) according to an embodiment of the present invention encodes (or decodes) an image in units of maximum coding units, based on coding units having sizes smaller than or equal to the maximum coding units. During the encoding, a size of each transformation unit used to perform transformation may be selected based on a data unit that is not larger than a corresponding coding unit.

For example, in the video encoding apparatus 100 (or the video decoding apparatus 200), if a size of the coding unit 710 is 64x64, transformation may be performed using the transformation units 720 having a size of 32x32.

Also, data of the coding unit 710 having the size of 64x64 may be encoded by performing transformation on each of transformation units having a size of 32x32, 16x16, 8x8, and 4x4, which are smaller than 64x64, and then a transformation unit having a least coding error may be selected.

FIG. 19 is a diagram illustrating encoding information corresponding to depths, according to an embodiment of the present invention.

The output unit 130 of the video encoding apparatus 100 may encode and transmit information 800 about a partition type, information 810 about a prediction mode, and information 820 about transformation unit size for each coding unit corresponding to a coded depth, as information about an encoding mode.

The information 800 indicates information about a shape of a partition obtained by splitting a prediction unit of a current coding unit, as a data unit for prediction-encoding the current coding unit. For example, a current coding unit CU_0 having a size of 2Nx2N may be split into any one of a partition 802 having a size of 2Nx2N, a partition 804 having a size of 2NxN, a partition 806 having a size of Nx2N, and a partition 808 having a size of NxN. In this case, the information 800 is set to indicate one of the partition 804 having a size of 2NxN, the partition 806 having a size of Nx2N, and the partition 808 having a size of NxN

The information 810 indicates a prediction mode of each partition. For example, the information 810 may indicate a mode of prediction-encoding the partition indicated by the information 800, i.e., an intra mode 812, an inter mode 814, or a skip mode 816.

The information 820 indicates a transformation unit to be based on when transformation is performed on a current coding unit. For example, the transformation unit may be a first intra transformation unit 822, a second intra transformation unit 824, a first inter transformation unit 826, or a second intra transformation unit 828.

The image data and encoding information extractor 220 of the video decoding apparatus 200 may extract and use the information 800, 810, and 820 for decoding coding units corresponding to depths.

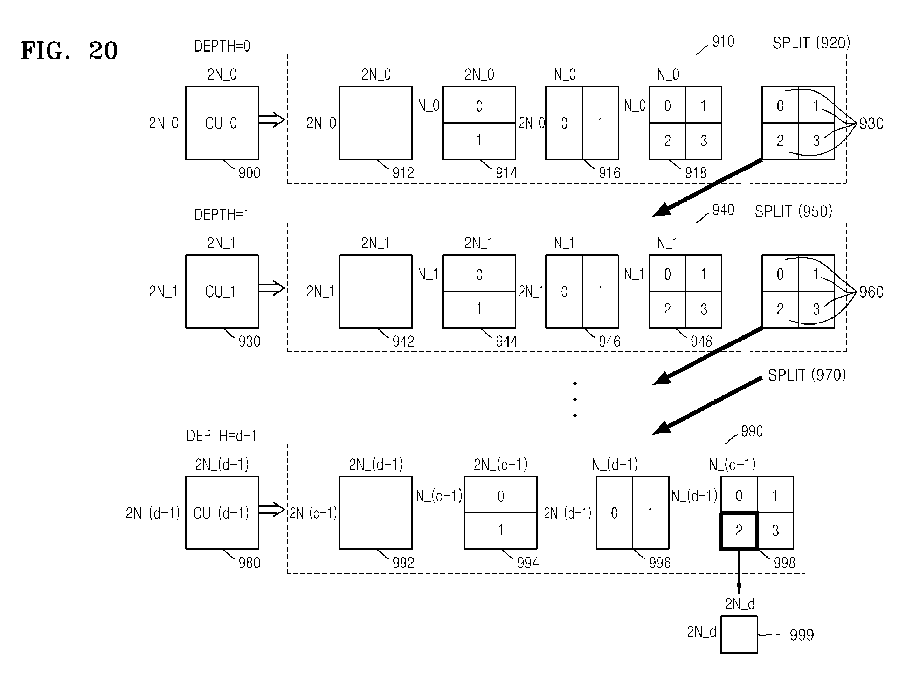

FIG. 20 is a diagram illustrating coding units corresponding to depths, according to an embodiment of the present invention.

Split information may be used to indicate a depth change. The spilt information indicates whether a coding unit of a current depth is split into coding units of a lower depth.

A prediction unit 910 for prediction-encoding a coding unit 900 having a depth of 0 and a size of 2N_0x2N_0 may include partitions of a partition type 912 having a size of 2N_0x2N_0, a partition type 914 having a size of 2N_0xN_0, a partition type 916 having a size of N_0x2N_0, and a partition type 918 having a size of N_0xN_0. Although FIG. 9 illustrates only the partition types 912 through 918 which are obtained by symmetrically splitting the prediction unit 910, a partition type is not limited thereto, and the partitions of the prediction unit 910 may include asymmetrical partitions, partitions having an arbitrary shape, and partitions having a geometrical shape.

Prediction-encoding is repeatedly performed on one partition having a size of 2N_0x2N_0, two partitions having a size of 2N_0xN_0, two partitions having a size of N_0x2N_0, and four partitions having a size of N_0xN_0, according to each partition type. Prediction-encoding may be performed on the partitions having the sizes of 2N_0x2N_0, N_0x2N_0, 2N_0xN_0, and N_0xN_0, according to an intra mode and an inter mode. Prediction-encoding is performed only on the partition having the size of 2N_0x2N_0, according to a skip mode.

If an encoding error is smallest in one of the partition types 912 through 916, the prediction unit 910 may not be split into a lower depth.

If an encoding error is the smallest in the partition type 918, a depth is changed from 0 to 1 to split the partition type 918 in operation 920, and encoding is repeatedly performed on coding units 930 having partitions of a depth of 2 and a size of N_0xN_0 to search for a minimum encoding error.

A prediction unit 940 for prediction-encoding the coding unit 930 having a depth of 1 and a size of 2N_1x2N_1 (=N_0xN_0) may include partitions of a partition type 942 having a size of 2N_1x2N_1, a partition type 944 having a size of 2N_1xN_1, a partition type 946 having a size of N_1x2N_1, and a partition type 948 having a size of N_1xN_1.

If an encoding error is the smallest in the partition type 948 having a size of N_1xN_1, a depth is changed from 1 to 2 to split the partition type 948 in operation 950, and encoding is repeatedly performed on coding units 960 having a depth of 2 and a size of N_2xN_2 so as to search for a minimum encoding error.

When a maximum depth is d, coding units corresponding to depths may be set up to when a depth becomes d-1, and split information may be set up to when a depth is d-2. In other words, when encoding is performed up to when the depth is d-1 after a coding unit corresponding to a depth of d-2 is split in operation 970, a prediction unit 990 for prediction-encoding a coding unit 980 having a depth of d-1 and a size of 2N_(d-1)x2N_(d-1) may include partitions of a partition type 992 having a size of 2N_(d-1)x2N_(d-1), a partition type 994 having a size of 2N_(d-1)xN_(d-1), a partition type 996 having a size of N_(d-1)x2N_(d-1), and a partition type 998 having a size of N_(d-1)xN_(d-1).

Prediction-encoding may be repeatedly performed on one partition having a size of 2N_(d-1)x2N_(d-1), two partitions having a size of 2N_(d-1)xN_(d-1), two partitions having a size of N_(d-1)x2N_(d-1), and four partitions having a size of N_(d-1)xN_(d-1) from among the partition types 992 through 998 so as to search for a partition type having a minimum encoding error.

Even when the partition type 998 has the minimum encoding error, since a maximum depth is d, a coding unit CU_(d-1) having a depth of d-1 is no longer split to a lower depth, and a coded depth for a current maximum coding unit 900 is determined to be d-1 and a partition type of the coding unit 900 may be determined to be N_(d-1)xN_(d-1). Also, since the maximum depth is d, split information is not set for a coding unit 952 having a depth of (d-1).

A data unit 999 may be a 'minimum unit' for the current maximum coding unit 900. A minimum unit according to an embodiment of the present invention may be a rectangular data unit obtained by splitting a minimum unit having a lowest coded depth by 4. By performing encoding repeatedly as described above, the video encoding apparatus 100 may determine a coded depth by comparing encoding errors according to depths of the coding unit 900 and selecting a depth having the least encoding error, and set a partition type and a prediction mode for the coding unit 900 as an encoding mode of the coded depth.

As such, minimum encoding errors according to depths, i.e., the depths of 0, 1, ..., d-1, and d, are compared with one another, and a depth having the least encoding error may be determined as a coded depth. The coded depth, the partition type of the prediction unit, and the prediction mode may be encoded and transmitted as information about an encoding mode. Also, since a coding unit is split from the depth of 0 to the coded depth, only split information of the coded depth is set to 0, and split information of the other depths excluding the coded depth is set to 1.

The image data and encoding information extractor 220 of the video decoding apparatus 200 may extract and use the information about the coded depth and the prediction unit of the coding unit 900 to decode the partition 912. The video decoding apparatus 200 may determine a depth corresponding to split information '0', as a coded depth, based on split information according to depths, and may use information about an encoding mode of the coded depth during a decoding process.

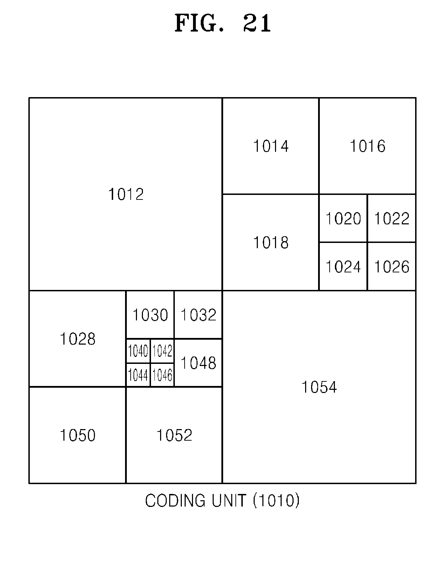

FIGS. 21, 22, and 23 are diagrams illustrating a relationship between coding units 1010, prediction units 1060, and transformation units 1070, according to an embodiment of the present invention.

The coding units 1010 are coding units corresponding to coded depths for a maximum coding unit, determined by the video encoding apparatus 100. The prediction units 1060 are partitions of prediction units of the respective coding units 1010, and the transformation units 1070 are transformation units of the respective coding units 1010.

Among the coding units 1010, if a depth of a maximum coding unit is 0, then coding units 1012 and 1054 have a depth of 1, coding units 1014, 1016, 1018, 1028, 1050, and 1052 have a depth of 2, coding units 1020, 1022, 1024, 1026, 1030, 1032, and 1048 have a depth of 3, and coding units 1040, 1042, 1044, and 1046 have a depth of 4.

Among the prediction units 1060, some partitions 1014, 1016, 1022, 1032, 1048, 1050, 1052, and 1054 are split into partitions split from coding units. In other words, the partitions 1014, 1022, 1050, and 1054 are 2NxN partition types, partitions 1016, 1048, and 1052 are Nx2N partition types, and the partition 1032 is a NxN partition type. Prediction units and partitions of the coding units 1010 are smaller than or equal to coding units corresponding thereto.

Among the transformation units 1070, transformation or inverse transformation is performed on image data corresponding to coding unit 1052, based on a data unit that is smaller than the coding unit 1052. Also, transformation units 1014, 1016, 1022, 1032, 1048, 1050, 1052, and 1054 are data units different from corresponding prediction units and partitions among the prediction units 1060, in terms of sizes and shapes. In other words, the video encoding apparatus 100 and the video decoding apparatus 200 according to an embodiment of the present invention may individually perform intra prediction, motion estimation, motion compensation, transformation, and inverse transformation on the same coding unit, based on different data units

Accordingly, an optimum coding unit may be determined by recursively encoding coding units having a hierarchical structure, in units of regions of each maximum coding unit, thereby obtaining coding units having a recursive tree structure. Encoding information may include split information about a coding unit, information about a partition type, information about a prediction mode, and information about a size of a transformation unit. Table 1 shows an example of encoding information that may be set by the video encoding apparatus 100 and the video decoding apparatus 200.

**[Table 1]**

| Split Information 0 | | | | | Split Information 1 |
|---|---|---|---|---|---|
| (Encoding on Coding Unit having Size of 2Nx2N and Current Depth of d) | | | | | |
| Pre diction Mode | Partition Type | | Size of Transformation Unit | | Repeatedly Encode Coding Units having Lower Depth of d+1 |
| Intra Inter | Symmetrical Partition Type | Asymmetrical Partition Type | Split Information 0 of Transformation Unit | Split Information 1 of Transformation Unit | |
| | | | | NxN (Symmetrical Type) | |
| Skip (Only 2Nx2N) | 2Nx2N | 2NxnU | | | |
| | 2NxN | 2NxnD | 2Nx2N | | |
| | Nx2N | nLx2N | | N/2xN/2 (Asymmetrical Type) | |
| | NxN | nRx2N | | | |

The output unit 130 of the video encoding apparatus 100 may output the encoding information about the coding units having a tree structure, and the image data and encoding information extractor 220 of the video decoding apparatus 200 may extract the encoding information about the coding units having a tree structure from a received bitstream.

Split information indicates whether a current coding unit is split into coding units of a lower depth. If split information of a current depth d is 0, a depth, in which the current coding unit is no longer split into coding units of a lower depth, is a coded depth, and thus information about a partition type, a prediction mode, and a size of a transformation unit may be defined for the coded depth. If the current coding unit is further split according to the split information, encoding is independently performed on four split coding units of a lower depth.

The prediction mode may be one of an intra mode, an inter mode, and a skip mode. The intra mode and the inter mode may be defined for all partition types, and the skip mode is defined only for a 2Nx2N partition type.

The information about the partition type may indicate symmetrical partition types having sizes of 2Nx2N, 2NxN, Nx2N, and NxN, which are obtained by symmetrically splitting a height or a width of a prediction unit, and asymmetrical partition types having sizes of 2NxnU, 2NxnD, nLx2N, and nRx2N, which are obtained by asymmetrically splitting the height or width of the prediction unit. The asymmetrical partition types having the sizes of 2NxnU and 2NxnD may be respectively obtained by splitting the height of the prediction unit in 1:3 and 3:1, and the asymmetrical partition types having the sizes of nLx2N and nRx2N may be respectively obtained by splitting the width of the prediction unit in 1:3 and 3:1.

The size of the transformation unit may be set to be two types in the intra mode and two types in the inter mode. In other words, if split information of the transformation unit is 0, the size of the transformation unit may be 2Nx2N to be equal to the size of the current coding unit. If the split information of the transformation unit is 1, transformation units may be obtained by splitting the current coding unit. Also, a size of a transformation unit may be NxN when a partition type of the current coding unit having the size of 2Nx2N is a symmetrical partition type, and may be N/2xN/2 when the partition type of the current coding unit is an asymmetrical partition type.

The encoding information about coding units having a tree structure may be assigned to at least one of a coding unit corresponding to a coded depth, a prediction unit, and a minimum unit. The coding unit corresponding to the coded depth may include at least one prediction unit and at least one minimum unit that contain the same encoding information.

Accordingly, whether adjacent data units are included in coding units corresponding to the same coded depth may be determined by comparing encoding information of the adjacent data units. Also, a coding unit corresponding to a coded depth may be determined using encoding information of a data unit. Thus, a distribution of coded depths in a maximum coding unit may be determined.

Accordingly, if the current coding unit is predicted based on encoding information of adjacent data units, encoding information of data units in coding units corresponding to depths adjacent to the current coding unit may be directly referred to and used.

Alternatively, if the current coding unit is predicted based on adjacent coding units, then adjacent coding units may be referred to by searching data units adjacent to the current coding unit from among coding units corresponding to depths, based on encoding information of adjacent coding units corresponding to depths.

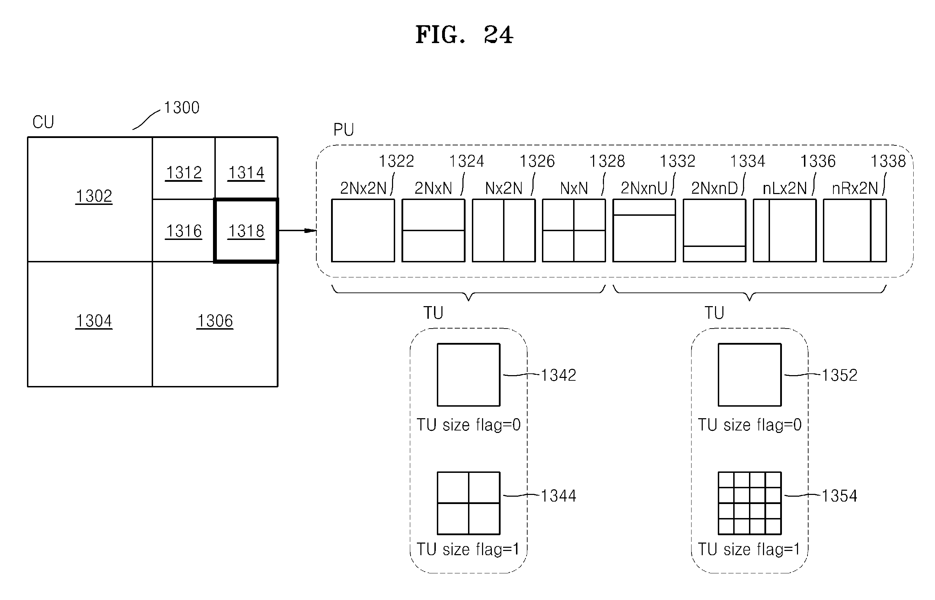

FIG. 24 is a diagram illustrating a relationship between a coding unit, a prediction unit, and a transformation unit, according to encoding mode information of Table 1.

A maximum coding unit 1300 includes coding units 1302, 1304, 1306, 1312, 1314, 1316, and 1318 of coded depths. Here, since the coding unit 1318 is a coding unit of a coded depth, split information thereof may be set to 0. Information about a partition type of the coding unit 1318 having a size of 2Nx2N may be set to be one of a partition type 1322 having a size of 2Nx2N, a partition type 1324 having a size of 2NxN, a partition type 1326 having a size of Nx2N, a partition type 1328 having a size of NxN, a partition type 1332 having a size of 2NxnU, a partition type 1334 having a size of 2NxnD, a partition type 1336 having a size of nLx2N, and a partition type 1338 having a size of nRx2N.

Transformation unit split information, i.e., a Tu size flag, is a type of transformation index. The size of a transformation unit corresponding to the transformation index may vary according to a prediction unit type or a partition type of a coding unit.

For example, if the partition type is set to be a symmetrical partition type, e.g., the partition type 1322, 1324, 1326, or 1328, then a transformation unit 1342 having a size of 2Nx2N is set when the TU size flag is '0', and a transformation unit 1344 having a size of NxN is set when the TU size flag is '1'.

If the partition type is set to be an asymmetrical partition type, e.g., the partition type 1332, 1334, 1336, or 1338, then a transformation unit 1352 having a size of 2Nx2N is set when a TU size flag is 0, and a transformation unit 1354 having a size of N/2xN/2 is set when a TU size flag is 1.

By storing a program that executes a method of encoding multi-view video data and a method of decoding multi-view video data according to an embodiment of the present invention described above with reference to FIGS. 1 to 24, on a computer readable recording medium, an individual computer system may easily perform these methods.

For convenience of explanation, the method of encoding multi-view video data and the method of decoding multi-view video data described above with reference to FIGS. 1 to 24 will now be referred to as 'video encoding method according to an embodiment of the present invention' and 'video decoding method according to an embodiment of the present invention', respectively. Also, the multi-view video data encoding apparatus 300 and the multi-view video data decoding apparatus 900 described above with reference to FIGS. 1 to 24 will now be referred to as 'video encoding apparatus according to an embodiment of the present invention' and 'video decoding apparatus according to an embodiment of the present invention', respectively.

A computer readable recording medium storing a program, e.g., a disc 260, according to an embodiment of the present invention will now be described in detail.

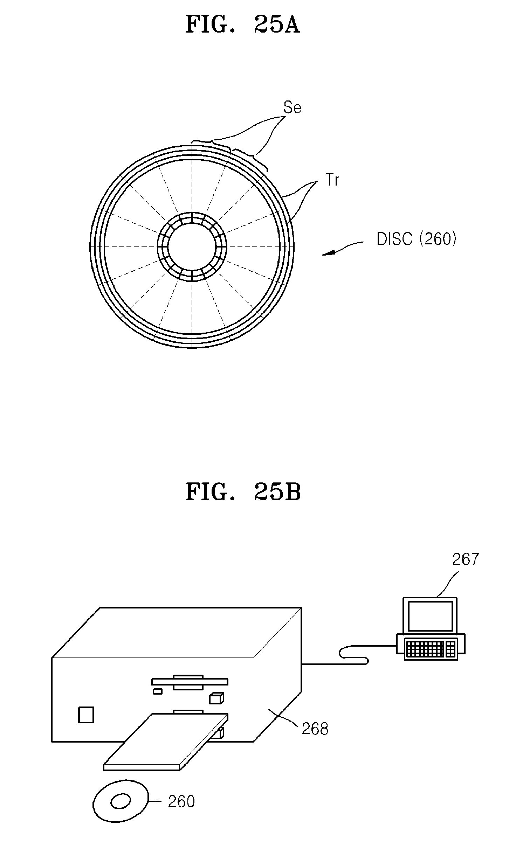

FIG. 25A illustrates a physical structure of a disc 260 that stores a program, according to an embodiment of the present invention. The disc 260 which is a storage medium may be a hard drive, a compact disc-read only memory (CD-ROM) disc, a Blu-ray disc, or a digital versatile disc (DVD). The disc 260 includes a plurality of concentric tracks Tf each being divided into a specific number of sectors Se in a circumferential direction of the disc 260. In a specific region of the disc 260, a program that executes a method of predicting multi-view video, a method of prediction restoring multi-view video, a method of encoding multi-view video, and a method of decoding multi-view video as described above may be assigned and stored.

A computer system embodied using a storage medium that stores a program for executing a video encoding method and a video decoding method as described above will now be described with reference to FIG. 25B.

FIG. 25B illustrates a disc drive 268that records and reads a program by using a disc 260. A computer system 267 may store program that executes at least one of a video encoding method and a video decoding method according to an embodiment of the present invention, in a disc 260 via the disc drive 268. To run the program stored in the disc 260 in the computer system 267, the program may be read from the disc 260 and be transmitted to the computer system 267 by using the disc drive 268.

The program that executes at least one of a video encoding method and a video decoding method according to an embodiment of the present invention may be stored not only in the disc 260 illustrated in FIG. 25A or 25B but also in a memory card, a ROM cassette, or a solid state drive (SSD).

A system to which the video encoding method and a video decoding method described above are applied will be described below.

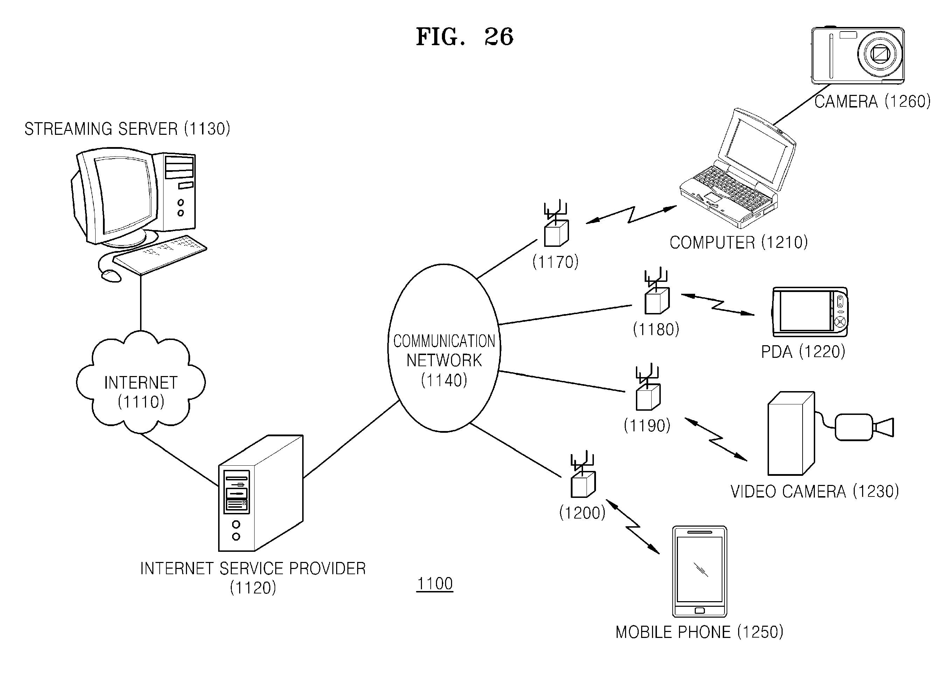

FIG. 26 illustrates an entire structure of a content supply system 1100 that provides a content distribution service. A service area of a communication system is divided into predetermined-sized cells, and wireless base stations 1170, 1180, 1190, and 1200 are installed in these cells, respectively.

The content supply system 1100 includes a plurality of independent devices. For example, the plurality of independent devices, such as a computer 1210, a personal digital assistant (PDA) 1220, a video camera 1230, and a mobile phone 1250, are connected to the Internet 1110 via an internet service provider 1120, a communication network 1140, and the wireless base stations 1170, 1180, 1190, and 1200.

However, the content supply system 1100 is not limited to that illustrated in FIG. 26, and devices may be selectively connected thereto. The plurality of independent devices may be directly connected to the communication network 1140, rather than via the wireless base stations 1170, 1180, 1190, and 1200.

The video camera 1230 is an imaging device, e.g., a digital video camera, which is capable of capturing video images. The mobile phone 1250 may employ at least one communication method from among various protocols, e.g., Personal Digital Communications (PDC), code division multiple access (CDMA), wideband-code division multiple access (W-CDMA), Global System for Mobile Communications (GSM), and Personal Handyphone System (PHS).

The video camera 1230 may be connected to a streaming server 1130 via the wireless base station 1190 and the communication network 1140. The streaming server 1130 allows content received from a user via the video camera 1230 to be streaming-transmitted via a real-time broadcast. The content received from the video camera 1230 may be encoded using the video camera 1230 or the streaming server 1130. Video data captured by the video camera 1230 may be transmitted to the streaming server 1130 via the computer 1210.

Video data captured by a camera 1230 may also be transmitted to the streaming server 1130 via the computer 1210. The camera 1260 is an imaging device capable of capturing both still images and video images, similar to a digital camera. The video data captured by the camera 1260 may be encoded using the camera 1260 or the computer 1210. Software that encoding and decoding of video may be stored in a computer readable recording medium, e.g., a CD-ROM disc, a floppy disc, a hard disc drive, an SSD, or a memory card, which may be accessible by the computer 1210.

If video data is captured by a camera built in the mobile phone 1250, the video data may be received from the mobile phone 1250.

The video data may also be encoded by a large scale integrated circuit (LSI) system installed in the video camera 1230, the mobile phone 1250, or the camera 1260.

According to an embodiment of the present invention, the content supply system 1100 may encode content data recorded by a user using the video camera 1230, the camera 1260, the mobile phone 1250, or another imaging device, e.g., content recorded during a concert, and transmit the encoded content data to the streaming server 1130. The streaming server 1130 may streaming-transmit the encoded content data to other clients that request the content data.

The clients are devices capable of decoding the encoded content data, e.g., the computer 1210, the PDA 1220, the video camera 1230, or the mobile phone 1250. Thus, the content supply system 1100 allows the clients to receive and reproduce the encoded content data. Also, the content supply system 1100 allows the clients to receive the encoded content data and decode and reproduce the encoded content data in real time, thereby enabling personal broadcasting.

Encoding and decoding operations of the plurality of independent devices included in the content supply system 1100 may be similar to those of a video encoding apparatus and a video decoding apparatus according to an embodiment of the present invention.

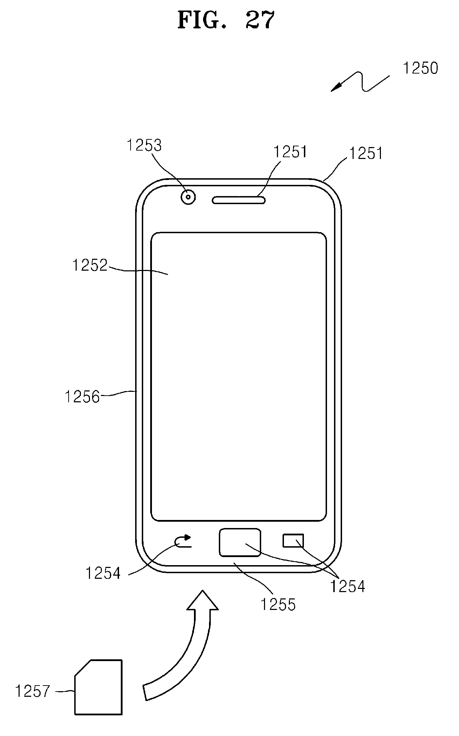

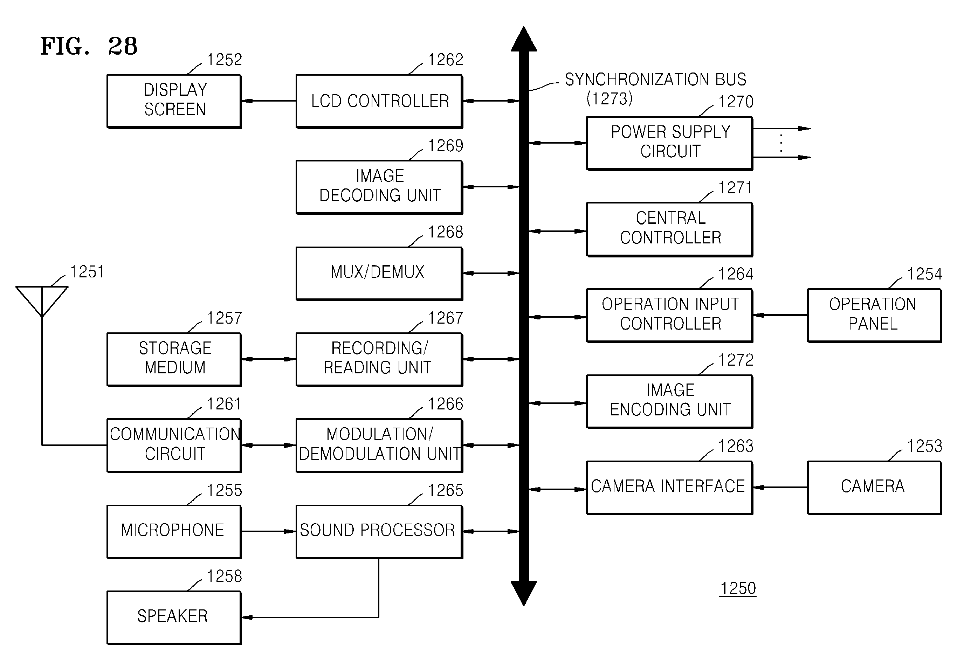

The mobile phone 1250 included in the content supply system 1100 according to an embodiment of the present invention will now be described in greater detail with reference to FIGS. 27 and 28.

FIG. 27 illustrates an external structure of a mobile phone 1250 to which a video encoding method and a video decoding method are applied, according to an embodiment of the present invention. The mobile phone 1250 may be a smart phone, the functions of which are not limited and a large part of the functions of which may be changed or expanded.

The mobile phone 1250 includes an internal antenna 1251 via which a radio-frequency (RF) signal may be exchanged with the wireless base station 1200 of FIG. 26, and includes a display screen 1252 for displaying images captured by a camera 1253 or images that are received via the antenna 1251 and decoded, e.g., a liquid crystal display (LCD) or an organic light-emitting diodes (OLED) screen. The smart phone 1251 includes an operation panel 1254 including a control button and a touch panel. If the display screen 1252 is a touch screen, the operation panel 1254 further includes a touch sensing panel of the display screen 1252. The smart phone 1251 includes a speaker for outputting voice and sound or another type sound output unit, and a microphone 1255 for inputting voice and sound or another type sound input unit. The smart phone 1251 further includes the camera 1253, such as a charge-coupled device (CCD) camera, to capture video and still images. The smart phone 1251 may further include a storage medium 1257 for storing encoded/decoded data, e.g., video or still images captured by the camera 1253, received via email, or obtained according to another method; and a slot 1256 via which the storage medium 1257 is loaded into the mobile phone 1250. The storage medium 1257 may be a flash memory, e.g., a secure digital (SD) card or an electrically erasable and programmable read only memory (EEPROM) included in a plastic case.

FIG. 28 illustrates an internal structure of the mobile phone 1250, according to an embodiment of the present invention. To systemically control parts of the mobile phone 1250 including the display screen 1252 and the operation panel 1254, a power supply circuit 1270, an operation input controller 1264, an image encoding unit 1272, a camera interface 1263, an LCD controller 1262, an image decoding unit 1269, a multiplexer/demultiplexer 1268, a recording/reading unit 1267, a modulation/demodulation unit 1266, and a sound processor 1265 are connected to a central controller 1271 via a synchronization bus 1273.

If a user operates a power button and changes from a 'power off' state to a power on' state, the power supply circuit 1270 supplies power to all the parts of the mobile phone 1250 from a battery pack, thereby setting the mobile phone 1250 in an operation mode.

The central controller 1271 includes a central processing unit (CPU), a ROM, and a random access memory (RAM).

While the mobile phone 1250 transmits communication data to the outside, a digital signal is generated in the mobile phone 1250 under control of the central controller. For example, the sound processor 1265 may generate a digital sound signal, the image encoding unit 1272 may generate a digital image signal, and text data of a message may be generated via the operation panel 1254 and the operation input controller 1264. When a digital signal is delivered to the modulation/demodulation unit 1266 under control of the central controller 1271, the modulation/demodulation unit 1266 performs modulation on a frequency band of the digital signal, and a communication circuit 1261performs digital-to-analog conversion (DAC) and frequency conversion on the frequency band-modulated digital signal. A transmission signal output from the communication circuit 1261 may be transmitted to a voice communication base station or the wireless base station 1200 via the antenna 1251.

For example, when the mobile phone 1250 is in a conversation mode, a sound signal obtained via the microphone 1255 is transformed into a digital sound signal by the sound processor 1265, under control of the central controller 1271. The digital sound signal may be transformed into a transformation signal via the modulation/demodulation unit 1266 and the communication circuit 1261, and may be transmitted via the antenna 1251.

When a text message, e.g., email, is transmitted in a data communication mode, text data of the text message is input via the operation panel 1254 and is transmitted to the central controller 1261 via the operation input controller 1264. Under control of the central controller 1261, the text data is transformed into a transmission signal via the modulation/demodulation unit 1266 and the communication circuit 1261 and is transmitted to the wireless base station 1200 via the antenna 1251.

To transmit image data in the data communication mode, image data captured by the camera 1253 is provided to the image encoding unit 1272 via the camera interface 1263. The captured image data may be directly displayed on the display screen 1252 via the camera interface 1263 and the LCD controller 1262.

A structure of the image encoding unit 1272 may correspond to that of the video encoding apparatus 100 described above. The image encoding unit 1272 may transform the image data received from the camera 1253 into compressively encoded image data according to a video encoding method employed by the video encoding apparatus 100 or the image encoder 400 described above, and then output the encoded image data to the multiplexer/demultiplexer 1268. During a recording operation of the camera 1253, a sound signal obtained by the microphone 1255 of the mobile phone 1250 may be transformed into digital sound data via the sound processor 1265, and the digital sound data may be delivered to the multiplexer/demultiplexer 1268.

The multiplexer/demultiplexer 1268 multiplexes the encoded image data received from the image encoding unit 1272, together with the sound data received from the sound processor 1265. A result of multiplexing the data may be transformed into a transmission signal via the modulation/demodulation unit 1266 and the communication circuit 1261, and may then be transmitted via the antenna 1251.

While the mobile phone 1250 receives communication data from the outside, frequency recovery and ADC are performed on a signal received via the antenna 1251 to transform the signal into a digital signal. The modulation/demodulation unit 1266 modulates a frequency band of the digital signal. The frequency-band modulated digital signal is transmitted to the video decoding unit 1269, the sound processor 1265, or the LCD controller 1262, according to the type of the digital signal.

In the conversation mode, the mobile phone 1250 amplifies a signal received via the antenna 1251, and obtains a digital sound signal by performing frequency conversion and ADC on the amplified signal. A received digital sound signal is transformed into an analog sound signal via the modulation/demodulation unit 1266 and the sound processor 1265, and the analog sound signal is output via the speaker 1258, under control of the central controller 1271.

When in the data communication mode, data of a video file accessed via an Internet website is received, a signal received from the wireless base station 1200 via the antenna 1251 is output as multiplexed data via the modulation/demodulation unit 1266, and the multiplexed data is transmitted to the multiplexer/demultiplexer 1268.

To decode the multiplexed data received via the antenna 1251, the multiplexer/demultiplexer 1268 demultiplexes the multiplexed data into an encoded video data stream and an encoded audio data stream. Via the synchronization bus 1273, the encoded video data stream and the encoded audio data stream are provided to the video decoding unit 1269 and the sound processor 1265, respectively.

A structure of the image decoding unit 1269 may correspond to that of the video decoding apparatus 200 described above. The image decoding unit 1269 may decode the encoded video data to obtain restored video data and provide the restored video data to the display screen 1252 via the LCD controller 1262, according to a video decoding method employed by the video decoding apparatus 200 or the image decoder 500 described above.

Thus, the data of the video file accessed via the Internet website may be displayed on the display screen 1252. At the same time, the sound processor 1265 may transform audio data into an analog sound signal, and provide the analog sound signal to the speaker 1258. Thus, audio data contained in the video file accessed via the Internet website may also be reproduced via the speaker 1258.

The mobile phone 1250 or another type of communication terminal may be a transceiving terminal including both a video encoding apparatus and a video decoding apparatus according to an embodiment of the present invention, may be a transceiving terminal including only the video encoding apparatus, or may be a transceiving terminal including only the video decoding apparatus.

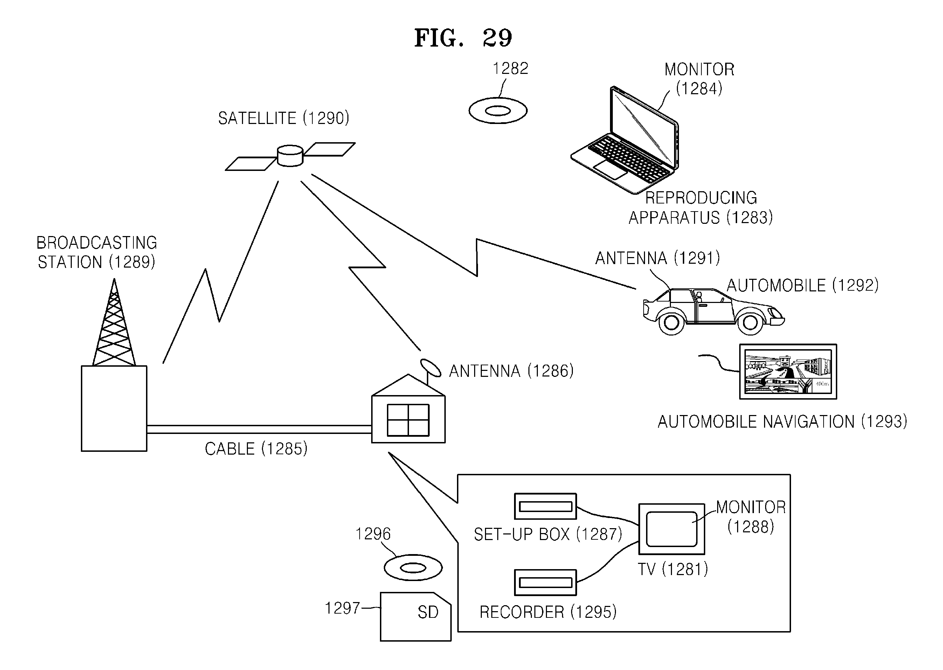

A communication system according to the present invention is not limited to the communication system described above with reference to FIG. 26. For example, FIG. 29 illustrates a digital broadcasting system employing a communication system, according to an embodiment of the present invention. The digital broadcasting system of FIG. 29 may receive a digital broadcast transmitted via a satellite or a terrestrial network by using a video encoding apparatus and a video decoding apparatus according to an embodiment of the present invention.

Specifically, a broadcasting station 1289 transmits a video data stream to a communication satellite or a broadcasting satellite 1290 by using electronic waves. The broadcasting satellite 1290 transmits a broadcast signal, and the broadcast signal is transmitted to a satellite broadcast receiver via a household antenna 1286. In every house, an encoded video stream may be decoded and reproduced by a TV receiver 1281, a set-top box 1287, or another device.

When a video decoding apparatus according to an embodiment of the present invention is included in a reproducing apparatus 1283, the reproducing apparatus 1283 may parse and decode an encoded video stream recorded on a storage medium 1282, such as a disc or a memory card to restore the original video signal. Thus, the restored video signal may be reproduced, for example, on a monitor 1284.

In the antenna 1286 for a satellite/terrestrial broadcast or the set-top box 1287 connected to a cable antenna 1285 for receiving cable television (TV) programs, a video decoding apparatus according to an embodiment of the present invention may be installed. Data output from the set-top box 1287 may also be reproduced on a TV monitor 1288.

As another example, a video decoding apparatus according to an embodiment of the present invention may be installed in the TV receiver 1281 instead of the set-top box 1287.

An automobile 1292 including an appropriate antenna 1291 may receive a signal transmitted from the satellite 1290 or the wireless base station 1170 of FIG. 26. A decoded video may be reproduced on a display screen of an automobile navigation system 1293 built in the automobile 1292.

A video signal may be encoded by a video encoding apparatus according to an embodiment of the present invention and may then be stored in a storage medium. Specifically, an image signal may be stored in a DVD disc 1296 by a DVD recorder or may be stored in a hard disc by a hard disc recorder 1295. As another example, the video signal may be stored in an SD card 1297. If the hard disc recorder 1295 includes a video decoding apparatus according to an embodiment of the present invention, a video signal recorded on the DVD disc 1296, the SD card 1297, or another storage medium may be reproduced on the TV monitor 1288.

The automobile navigation system 1293 may not include the camera 1253, the camera interface 1263, and the image encoding unit 1272 of FIG. 28. For example, the computer 1210 and the TV receiver 1281 may not be included in the camera 1253, the camera interface 1263, and the image encoding unit 1272 of FIG. 28.

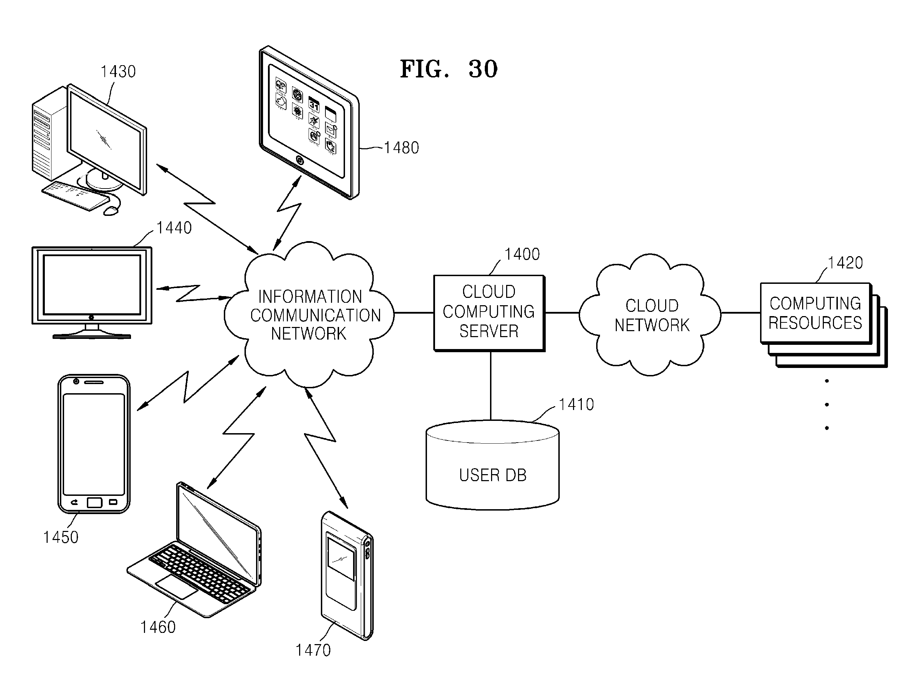

FIG. 30 illustrates a network structure of a cloud computing system using a video encoding apparatus and a video decoding apparatus, according to an embodiment of the present invention.

The cloud computing system may include a cloud computing server 1400, a user database (DB) 1410, a plurality of computing resources 1420, and a user terminal.

The cloud computing system provides an on-demand outsourcing service of the plurality of computing resources 1420 via an information communication network, e.g., the Internet, in response to a request from the user terminal. Under a cloud computing environment, a service provider provides users with desired services by combining computing resources at data centers located at physically different locations by using virtualization technology. A service user does not have to install computing resources, e.g., an application, a storage facility, an operating system (OS), or security features, into his/her own terminal in order to use them, but may select and use desired services from among services in a virtual space generated through the virtualization technology, at a desired point of time.

A user terminal of a specified service user is connected to the cloud computing server 1410 via an information communication network including the Internet and a mobile telecommunication network. User terminals may be provided with cloud computing services, and particularly motion picture reproduction services, from the cloud computing server 1410. The user terminals may be various types of electronic devices capable of being connected to the Internet, e.g., a desk-top PC 1430, a smart TV 1440, a smart phone 1450, a notebook computer 1460, a portable multimedia player (PMP) 1470, a tablet PC 1480, and the like.

The cloud computing server 1410 may combine the plurality of computing resources 1420 distributed in a cloud network and provide user terminals with a result of the combining. The plurality of computing resources 1420 may include various data services, and may include data uploaded from user terminals. As described above, the cloud computing server 1410 may provide user terminals with desired services by combining a motion picture database distributed in different regions according to the virtualization technology.

User information about users who has subscribed to a cloud computing service is stored in the user DB 1410. The user information may include logging information, addresses, names, and personal credit information of the users. The user information may further include indexes of motion pictures. Here, the indexes may include a list of motion pictures that have already been reproduced, a list of motion pictures that are being reproduced, a pausing point of a motion picture that was being reproduced, and the like.

Information about a motion picture stored in the user DB 1410 may be shared between user devices. For example, when a motion picture service is provided to the notebook computer 1460 in response to a request from the notebook computer 1460, a reproduction history of the motion picture service is stored in the user DB 1410. When a request to reproduce this motion picture service is received from the smart phone 1450, the cloud computing server 1410 searches for and reproduces this motion picture service, based on the user DB 1410. When the smart phone 1450 receives a motion picture data stream from the cloud computing server 1410, a process of reproducing video by decoding the motion picture data stream is similar to an operation of the mobile phone 1250 described above with reference to FIG. 28.

The cloud computing server 1410 may refer to a reproduction history of a desired motion picture service, stored in the user DB 1410. For example, the cloud computing server 1410 receives a request to reproduce a motion picture stored in the user DB 1410, from a user terminal. If this motion picture was being reproduced, then a method of streaming this motion picture, performed by the cloud computing server 1410 may vary according to the request from the user terminal, i.e., according to whether the motion picture will be reproduced, starting from a start thereof or a pausing point thereof. For example, if the user terminal requests to reproduce the motion picture, starting from the start thereof, the cloud computing server 1410 streaming-transmits the motion picture starting from a first frame thereof to the user terminal. If the user terminal requests to reproduce the motion picture, starting from the pausing point thereof, the cloud computing server 1410 streaming-transmits the motion picture starting from a frame corresponding to the pausing point, to the user terminal.

In this case, the user terminal may include a video decoding apparatus as described above with reference to FIGS. 1 to 24. As another example, the user terminal may include a video encoding apparatus as described above with reference to FIGS. 1 to 24. Alternatively, the user terminal may include both the video decoding apparatus and the video encoding apparatus as described above with reference to FIGS. 1 to 24.

Various applications of a video encoding method, a video decoding method, a video encoding apparatus, and a video decoding apparatus according to embodiments of the present invention described above with reference to FIGS. 1 to 24 have been described above with reference to FIGS. 25A to 30. However, methods of storing the video encoding method and the video decoding method in a storage medium or methods of including the video encoding apparatus and the video decoding apparatus in a device according to various embodiments of the present invention, are not limited to the embodiments described above with reference to FIGS. 25A to 30.

Those of ordinary skill in the art would understand the block diagrams disclosed in the present disclosure as conceptual diagrams of circuits for realizing the principles of the present invention. Similarly, it would be apparent to those of ordinary skill in the art that arbitrary flow charts, flow diagrams, state transition diagrams, pseudo code, and the like denote various processes that may be substantially stored in a computer readable recording medium and that may be performed by a computer or a processor, regardless of whether the computer or the processor are explicitly illustrated or not. Thus, the embodiments of the present invention described above may be embodied as a computer program. The computer program may be stored in a computer readable recording medium, and executed using a general digital computer. Examples of the computer readable medium are a magnetic recording medium (a ROM, a floppy disc, a hard disc, etc.), and an optical recording medium (a CD-ROM, a DVD, etc.).

The functions of various elements illustrated in the drawings may be related to appropriate software, and be provided via not only hardware capable of executing the software but also exclusive hardware. These functions may also be provided via a single exclusive processor, a single shared processor, or a plurality of individual processors, some of which may be shared. Also, explicit use of the term 'processor' or 'controller' is not limited to exclusively using hardware capable of executing software, and may implicitly include hardware such as a digital signal processor (DSP), and a read-only memory (ROM), a random access memory (RAM), or a non-volatile storage medium for storing software.

In the claims of the present specification, an element suggested as an element for performing a specific operation includes any arbitrary methods of performing the specific operation. Examples of this element may include a combination of circuit elements capable of performing the specific operation, or software having an arbitrary form, e.g., firmware or microcode, which is combined with an appropriate circuit for executing software for performing the specific operation.

In the present disclosure, the expression 'an embodiment' of the principles of the present invention and various modifications of this expression mean that specific features, structure, and characteristics related to this embodiment are included in at least one embodiment of the principles of the present invention. Thus, the expression 'an embodiment' and arbitrary other modifications thereof disclosed in the present disclosure do not always indicate the same embodiment.

In the present disclosure, the expression 'at least one of' of 'at least one of A and B' is used to inclusively mean that only the first option (A) is selected, only the second option (B) is selected, or both the first and second operations (A and B) are selected. In addition, the expression 'at least one of A, B, and C' is used to inclusively mean that only the first option (A) is selected, only the second option (B) is selected, only the third option (C) is selected, only the first and second options (A and B) are selected, only the second and third options (B and C) are selected, only the first and third (A and C) are selectedor all the three options (A, B, and C) are selected. When more than three items are listed in relation to this expression, the meaning thereof would be apparent to those of ordinary skill in the art.

Exemplary embodiments of the present invention have been described above.

While the present invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. A method of encoding multi-view video data, the method comprising:
obtaining a multi-view color video frame and a depth map frame corresponding to the multi-view color video frame;
prediction-encoding the multi-view color video frame; and
prediction-encoding the corresponding depth map frame, based on a result of prediction-encoding the multi-view color video frame.

2. The method of claim 1, wherein the prediction-encoding of the multi-view color video frame comprises determining coding units having a tree structure including coding units of a coded depth from among hierarchical coding units corresponding to depths, for each of at least one maximum coding unit that is split from the multi-view color video frame; determining partitions for prediction-encoding each of the coding units corresponding to the coded depth; and determining transformation units having a tree structure by performing transformation based on hierarchical transformation units, wherein the depths each denote a number of times the at least one maximum coding unit is spatially split.

3. The method of claim 2, wherein the result of prediction-encoding the multi-view color video frame comprises split information including information about coding units, partition units, and transformation units determined for each of the at least one maximum coding unit that is split from the multi-view color video frame, and
the prediction-encoding of the depth map frame comprises setting coding units, partition units, and transformation units for each of at least one maximum coding unit that is split from the corresponding depth map frame in a split shape of the multi-view color video frame, based on the split information of the multi-view color video frame, and prediction-encoding the depth map frame, based on the set coding units, partition units, and transformation units.

4. The method of claim 1, wherein the result of prediction-encoding the multi-view color video frame comprises information about a prediction mode for the multi-view color video frame, and
the prediction-encoding of the depth map frame comprises setting a prediction mode for a block of the depth map frame to be the same as a prediction mode for a block of the multi-view color video frame.

5. The method of claim 4, wherein, if the prediction mode for the block of the multi-view color video frame is an intra prediction mode, then the prediction-encoding of the depth map frame comprises predicting a block of the depth map frame, which is disposed at the same location as the block of the multi-view color video frame, by using a pixel value of the block of the multi-view color video frame.

6. The method of claim 1, wherein the result of prediction-encoding the multi-view color video frame comprises information about a motion vector of a block of the multi-view color video frame, and
the prediction-encoding of the depth map frame comprises determining a motion vector of a block of the depth map frame by using the motion vector of the block of the multi-view color video frame.

7. The method of claim 6, wherein the prediction-encoding of the depth map frame further comprises:
determining an optimum motion vector of the block of the depth map frame by changing the motion vector of the block of the multi-view color video frame within a predetermined pixel range; and
encoding an adjustment value which is a difference between the optimum motion vector and the motion vector of the block of the multi-view color video frame, as information about the motion vector of the block of the depth map frame.

8. A method of decoding multi-view video data, the method comprising:
receiving a bitstream containing a result of encoding a multi-view color video frame and a depth map frame corresponding to the multi-view color video frame;
decoding the multi-view color video frame; and
prediction-decoding the corresponding depth map frame, based on a result of decoding the multi-view color video frame.

9. The method of claim 8, wherein the prediction-decoding of the multi-view color video frame comprises:
obtaining information about a size of each of at least one maximum coding unit that is split from the multi-view color video frame, a depth denoting a number of times the at least one maximum coding unit is spatially split, partitions used to prediction-encode coding units hierarchically configured according to the depth, and transformation units having a hierarchical structure, from the bitstream; and
determining coding units having a tree structure including coding units corresponding to a coded depth from among hierarchical coding units corresponding to depths, for each of the at least one maximum coding unit that is split from the multi-view color video frame; determining partitions for prediction-decoding each of the coding units corresponding to the coded depth; and determining transformation units having a tree structure, based on the obtained information, wherein the depths each denote the number of times the at least one maximum coding unit is spatially split.

10. The method of claim 9, wherein the result of decoding the multi-view color video frame comprises split information including information about coding units, partition units, and transformation units determined for each of the at least one maximum coding unit that is split from the multi-view color video frame, and
the prediction-decoding of the depth map frame comprises setting coding units, partition units, and transformation units in a split shape of the multi-view color video frame, for each of at least one maximum coding unit that is split from the corresponding depth map frame, based on the split information of the multi-view color video frame, and prediction-decoding the depth map frame based on the set coding units, partition units, and transformation units.

11. The method of claim 8, wherein the result of decoding the multi-view color video frame comprises information about a prediction mode for the multi-view color video frame, and
the prediction-decoding of the depth map frame comprises setting a prediction mode for a block of the depth map frame to be the same as information about a prediction mode for a block of the multi-view color video frame.

12. The method of claim 11, wherein, if the prediction mode for the block of the multi-view color video frame is an intra prediction mode, then the prediction-decoding of the depth map frame comprises predicting a block of the depth map frame, which is disposed on the same location as the block of the multi-view color video frame, based on a pixel value of the block of the multi-view color video frame.

13. The method of claim 8, wherein the result of decoding the multi-view color video frame comprises information about a motion vector of a block of the multi-view color video frame, and
the prediction-decoding of the depth map frame comprises determining a motion vector of a block of the depth map frame, based on the motion vector of the block of the multi-view color video frame.

14. The method of claim 13, wherein the prediction-decoding of the depth map frame comprises:
obtaining an adjustment value, which is a difference between an optimum motion vector of the block of the depth map frame and the motion vector of the block of the multi-view color video frame, from the bitstream, wherein the optimum motion vector is determined by changing the motion vector of the block of the multi-view color video frame within a predetermine pixel range; and
obtaining the motion vector of the block of the depth map frame by adding the adjustment value and the motion vector of the block of the multi-view color video frame together.

15. An apparatus for decoding multi-view video data, the apparatus comprising:
a receiving unit for receiving a bitstream including an encoded a multi-view color video frame and a depth map frame corresponding to the multi-view color video frame;
a color video frame decoding unit for decoding the encoded multi-view color video frame obtained from the bitstream; and
a depth map frame decoding unit for prediction-decoding the corresponding depth map frame, based on a result of decoding the multi-view color video frame.
